(19)

Europäisches
Patentamt
European
Patent Office
Office européen
des brevets

(11) **EP 4 020 393 A1**

(12) **EUROPEAN PATENT APPLICATION**

(43) Date of publication:
**29.06.2022 Bulletin 2022/26**

(21) Application number: **21195500.0**

(22) Date of filing: **08.09.2021**

(51) International Patent Classification (IPC):
**G06T 7/73** $^{(2017.01)}$    **G06T 7/80** $^{(2017.01)}$

(52) Cooperative Patent Classification (CPC):
**G06K 9/6232; G06T 7/73; G06T 7/80; G06V 10/56; G06V 40/107; G06V 40/20;** G06T 2207/10016; G06T 2207/10024; G06T 2207/10028; G06T 2207/20081; G06T 2207/30196

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **23.12.2020 US 202017131826**

(71) Applicant: **INTEL Corporation
Santa Clara, CA 95054 (US)**

(72) Inventor: **GONZALEZ AGUIRRE, David
Portland, 97209 (US)**

(74) Representative: **Viering, Jentschura & Partner mbB
Patent- und Rechtsanwälte
Am Brauhaus 8
01099 Dresden (DE)**

(54) **NATURAL AND IMMERSIVE DATA-ANNOTATION SYSTEM FOR SPACE-TIME ARTIFICIAL INTELLIGENCE IN ROBOTICS AND SMART-SPACES**

(57)    An annotation device receives 4D sensor data representative of a first scene and that includes a point representative of a human limb in the first scene. The annotation device also receives 4D data representative of a second scene that includes points representative of a feature in the second scene. In addition, the annotation device generates a first tree data structure representative of occupation by the human limb in the first scene based on the point and a second tree data structure representative of occupation of the second scene based on the plurality of points. The annotation device maps the first tree data structure and the second tree data structure to a reference frame. The annotation device determines whether a tree-to-tree structure intersection of the feature and the human limb exists within the reference frame and annotates the feature based on the tree-to-tree structure intersection.

FIG. 7

EP 4 020 393 A1

**Description**

TECHNICAL FIELD

The aspects discussed in the present disclosure are related natural and immersive data-annotation system for space-time artificial intelligence in robotics and smart-spaces.

BACKGROUND

Unless otherwise indicated in the present disclosure, the materials described in the present disclosure are not prior art to the claims in the present application and are not admitted to be prior art by inclusion in this section.

A computing device may perform supervised machine learning (SML) using annotated data that includes labels identifying features within the annotated data. The annotated data may be generated by grouping raw data into segments, regions, or intervals based on labels. For example, the raw data may be grouped based on the features (e.g., physical object, degrees of freedom, discrete events). A user may asses the raw data and identify the features to determine which labels to associate with the features. Autonomous devices may use the SML model to control operation of the autonomous devices. The autonomous devices may identify features in a current operational environment based on the SML model.

The subject matter claimed in the present disclosure is not limited to aspects that solve any disadvantages or that operate only in environments such as those described above. Rather, this background is only provided to illustrate one example technology area where some aspects described in the present disclosure may be practiced.

BRIEF DESCRIPTION OF THE DRAWINGS

Example aspects will be described and explained with additional specificity and detail through the use of the accompanying drawings in which:

FIG. 1 illustrates a block diagram of an example environment for data annotation of raw data;
FIG. 2 illustrates a volumetric representation of an example environment that includes a three dimensional (3D) workspace for data annotation;
FIG. 3 illustrates an example volumetric representation of the raw data that may be displayed in the 3D workspaces of FIGs. 1 and 2;
FIG. 4 illustrates example surface manifolds that may be selected by a user within the 3D workspaces of FIGs. 1 and 2;
FIG. 5 illustrates an example flowchart of a method to annotate the raw data using a volumetric representation of the raw data and the 3D workspace;
FIG. 6 illustrates an example system for providing a perceptual user interface (PUI); and
FIG. 7 illustrates an example flowchart of annotating a feature within the raw data,

all according to at least one aspect described in the present disclosure.

DETAILED DESCRIPTION

The following detailed description refers to the accompanying drawings that show, by way of illustration, exemplary details in which aspects of the present disclosure may be practiced.

The word "exemplary" is used herein to mean "serving as an example, instance, or illustration". Any aspect or design described herein as "exemplary" is not necessarily to be construed as preferred or advantageous over other aspects or designs.

Throughout the drawings, it should be noted that like reference numbers are used to depict the same or similar elements, features, and structures, unless otherwise noted.

The phrase "at least one" and "one or more" may be understood to include a numerical quantity greater than or equal to one (e.g., one, two, three, four, [...], etc.). The phrase "at least one of" with regard to a group of elements may be used herein to mean at least one element from the group consisting of the elements. For example, the phrase "at least one of" with regard to a group of elements may be used herein to mean a selection of: one of the listed elements, a plurality of one of the listed elements, a plurality of individual listed elements, or a plurality of a multiple of individual listed elements.

The words "plural" and "multiple" in the description and in the claims expressly refer to a quantity greater than one. Accordingly, any phrases explicitly invoking the aforementioned words (e.g., "plural [elements]", "multiple [elements]") referring to a quantity of elements expressly refers to more than one of the said elements. For instance, the phrase "a plurality" may be understood to include a numerical quantity greater than or equal to two (e.g., two, three, four, five, [...], etc.).

The phrases "group (of)", "set (of)", "collection (of)", "series (of)", "sequence (of)", "grouping (of)", etc., in the description and in the claims, if any, refer to a quantity equal to or greater than one, i.e., one or more. The terms "proper subset", "reduced subset", and "lesser subset" refer to a subset of a set that is not equal to the set, illustratively, referring to a subset of a set that contains less elements than the set.

The term "data" as used herein may be understood to include information in any suitable analog or digital form, e.g., provided as a file, a portion of a file, a set of files, a signal or stream, a portion of a signal or stream, a set of signals or streams, and the like. Further, the term "data" may also be used to mean a reference to information, e.g., in form of a pointer. The term "data", however, is not limited to the aforementioned examples and may take various forms and represent any information as understood in the art.

The terms "processor" or "controller" as, for example, used herein may be understood as any kind of technological entity that allows handling of data. The data may be handled according to one or more specific functions executed by the processor or controller. Further, a processor or controller as used herein may be understood as any kind of circuit, e.g., any kind of analog or digital circuit. A processor or a controller may thus be or include an analog circuit, digital circuit, mixed-signal circuit, logic circuit, processor, microprocessor, Central Processing Unit (CPU), Graphics Processing Unit (GPU), Digital Signal Processor (DSP), Field Programmable Gate Array (FPGA), integrated circuit, Application Specific Integrated Circuit (ASIC), etc., or any combination thereof. Any other kind of implementation of the respective functions, which will be described below in further detail, may also be understood as a processor, controller, or logic circuit. It is understood that any two (or more) of the processors, controllers, or logic circuits detailed herein may be realized as a single entity with equivalent functionality or the like, and conversely that any single processor, controller, or logic circuit detailed herein may be realized as two (or more) separate entities with equivalent functionality or the like.

As used herein, "memory" is understood as a computer-readable medium (e.g., a non-transitory computer-readable medium) in which data or information can be stored for retrieval. References to "memory" included herein may thus be understood as referring to volatile or nonvolatile memory, including random access memory (RAM), read-only memory (ROM), flash memory, solid-state storage, magnetic tape, hard disk drive, optical drive, 3D XPointTM, among others, or any combination thereof. Registers, shift registers, processor registers, data buffers, among others, are also embraced herein by the term memory. The term "software" refers to any type of executable instruction, including firmware.

Unless explicitly specified, the term "transmit" encompasses both direct (point-to-point) and indirect transmission (via one or more intermediary points). Similarly, the term "receive" encompasses both direct and indirect reception. Furthermore, the terms "transmit," "receive," "communicate," and other similar terms encompass both physical transmission (e.g., the transmission of radio signals) and logical transmission (e.g., the transmission of digital data over a logical software-level connection). For example, a processor or controller may transmit or receive data over a software-level connection with another processor or controller in the form of radio signals, where the physical transmission and reception is handled by radio-layer components such as RF transceivers and antennas, and the logical transmission and reception over the software-level connection is performed by the processors or controllers. The term "communicate" encompasses one or both of transmitting and receiving, i.e., unidirectional or bidirectional communication in one or both of the incoming and outgoing directions. The term "calculate" encompasses both 'direct' calculations via a mathematical expression/formula/relationship and 'indirect' calculations via lookup or hash tables and other array indexing or searching operations.

A computing device may perform supervised machine learning (SML) (e.g., corrective leaning) using annotated data that includes labels identifying features within the annotated data. Examples of SML may include back-propagation in a neural network, deep neural networks, gaussian processes, or any other appropriate SML. The annotated data may be generated by labelling raw data to enhance the raw data into segments, regions, or intervals based on the labels. For example, the raw data may be grouped based on the features (e.g., physical object, degrees of freedom, discrete events).

To generate the annotated data, a user may asses the raw data and identify features to determine which labels to associate with the features. The user may select labels from a pre-defined taxonomy of labels. In some aspects, the pre-defined taxonomy of labels may be based on an application of the SML. The computing device may perform the SML using the annotated data to identify features in an environment that are the same as similar to the labelled features in the annotated data.

The computing device may generate a SML model that may be used to control autonomous vehicles, steer robotic devices, or other types of autonomous devices. The autonomous device may identify features in a current operational environment based on the SML model. In addition, the autonomous device may determine operations to perform relative to the features based on the SML model. For example, the autonomous device may determine whether to stop, steer around, or accelerate beyond a feature in the environment based on the SML model.

During the annotation process, some data annotation technologies may display a representation of the raw data as a two dimensional (2D) representation. In addition, these data annotation technologies may receive the user input via a 2D graphical user interface (GUI) (e.g., via mouse clicks and key strokes). Displaying data (e.g., displaying raw data, sensor data, annotated data, etc.), as used in the present disclosure, includes displaying a representation of the data via a display device.

These data annotation technologies may produce artifacts or other digital clutter when the raw data includes four dimensional (4D) (e.g., spatio-temporal) data. For example, these data annotation technologies may display and annotate each frame of the raw data (e.g., may not perform time slicing). As another example, these data technologies may only display the raw data as one dimensional (ID), 2D, or 2.5D perspective views without color coding or transparency/opacity being performed. These data annotation technologies may generate ambiguity in the representation of the features within the raw data.

Some data annotation technologies may cause a user to alternate between views and navigation modes of the raw data (e.g., between annotation views, configuration views, color views, etc.) to identify the features within the raw data. These data annotation technologies may hinder efficient annotation of the raw data that includes 4D data and may increase labor, time, and cost associated with annotation of 4D data.

Some data annotation technologies may display the raw data as a stereoscopic view via a head mounted display (e.g., a virtual reality (VR) headset or augmented reality (AR) headset). These data annotation technologies may include controllers that provide a limited number of degrees of freedom for labelling the features within the raw data.

Some data annotation technologies may generate a skeletal representation of a user to annotate the raw data. These data annotation technologies may generate the skeletal representation based on sensor data. However, the skeletal representation may be unstable (e.g., the skeletal representation may shake or vanish depending on lighting of the environment or a pose of the human) due to not being a volumetric representation of the sensor data. In addition, these data annotation technologies may not display the raw data as a 3D representation (e.g., a volumetric representation) that the user can interact with.

These data annotation technologies may include limited labelling capabilities. For example, some controllers may only include six degrees of freedom (e.g., a joystick state) for selecting a feature and labelling the feature. In addition, these data annotation technologies may rely on controller-eye coordination of the user. For example, the controller-eye coordination of the user may determine an efficiency of selecting the features within the raw data using a joystick, a mouse, or some other controller. Further, these data annotation technologies may increase a physical demand on the user (e.g., a controller paid load) to label the features.

These data annotation technologies may cause the controllers to consume power, which may exhaust batteries of the controllers. Recharging or replacing the batteries within the controllers may increase an amount of time consumed to annotate the raw data. These data annotation technologies may cause the user to spend time learning system protocols and menu sequences, which may increase an amount of time to annotate the raw data.

Some aspects described in the present disclosure may annotate the raw data based on controller free gestures, motions, virtual manipulations, or some combination thereof performed by the user relative to a volumetric representation of the raw data within a 3D workspace. These aspects may implement computational geometry and machine vision to capture the gestures, motions, and virtual manipulations of the raw data to annotate the raw data and generate the annotated data.

Some aspects described in the present disclosure may generate a volumetric digital representation of human limbs (e.g., human extremities such as hands, arms, legs, fingers, or any other body part. ) that are physically positioned within the 3D workspace. These aspects may also display the volumetric digital representation of the raw data within the 3D workspace. These aspects may annotate the features based on an octree-to-octree intersection of the volumetric representation of the human limbs and the volumetric representation of the features within a subspace of the 3D workspace. An octree may include a tree data structure including multiple internal nodes (e.g., parent nodes, children nodes, or any other appropriate generation of nodes). In some aspects, each internal node of the tree data structure may include eight children. In these and other aspects, each node in an octree may subdivide the 3D workspace into eight octants.

In addition, the raw data may include multiple frames that represent occupation of the environment at different periods of time. Some aspects described in the present disclosure may perform time slicing to generate a single frame that represents an aggregation of the frames within the raw data. For example, the single frame may display aggregated features that represent positions and occupation of the features in all frames that were aggregated.

Some aspects described in the present disclosure may include a system. The system may include an annotation device and one or more sensors. The annotation device may include a memory and a processor. The memory may include computer-readable instructions. The processor may be operatively coupled to the memory. In addition, the processor may read and execute the computer-readable instructions to perform or control performance of operations of the annotation device.

The annotation device may receive 4D sensor data. The 4D sensor data may be representative of the 3D workspace (e.g., a first scene). In some aspects, the 4D sensor data may include a sequential collection of 3D data sets. In these and other aspects, the 3D data sets may form at least a portion of the 4D sensor data. The 4D sensor data may include multiple points representative of any portion of a human (e.g., a human limb) physically positioned within the 3D workspace. The annotation device may also receive the raw data (e.g., 4D data representative of a second scene). The raw data may include multiple points representative of the features in the raw data. In addition, the annotation device may generate a first octree representative of occupation by the human within the 3D workspace. In some aspects, the first octree may be generated for each point cloud captured. The annotation device may also identify portions of the human within the 3D workspace that correspond to human limbs. The annotation device may generate the first octree based on the points within the 4D sensor data. The annotation device may generate a second octree representative of occupation of the features in the raw data. The annotation device may generate the second octree based on the points in the raw data.

The annotation device map the first octree and the second octree to a reference frame. In some aspects, the first octree and the second octree may be mapped to the reference frame as 3D information in the sensor data domain. The reference frame may include an aggregated frame as discussed elsewhere in the present disclosure. The annotation device may also determine whether there is an octree-to-octree intersection of the features in the raw data and the human limb within the reference frame. The annotation device may annotate the feature based on the octree-to-octree intersection of the first octree and the second octree.

At least one aspect of the annotation device described in the present disclosure may annotate 4D raw data while reducing workloads on the user, the annotation device, or some combination thereof. In addition, the annotation device may associate complex labelling commands to individually designated gestures to increase the degrees of freedom of the user. Increasing the degrees of freedom of the user may cause the annotation process to be more effective and efficient. In addition, the annotation device and the sensors may eliminate the use of controllers, the controller-eye coordination, and learning curve for the annotation device, which may reduce the workload of the user. Reducing the workload of the user may reduce the amount of time to annotate the data. Further, the annotation device and the sensors may reduce or eliminate the hardware maintenance, which may reduce an amount of down time during the annotation process.

These and other aspects of the present disclosure will be explained with reference to the accompanying figures. It is to be understood that the figures are diagrammatic and schematic representations of such example aspects, and are not limiting, nor are they necessarily drawn to scale. In the figures, features with like numbers indicate like structure and function unless described otherwise.

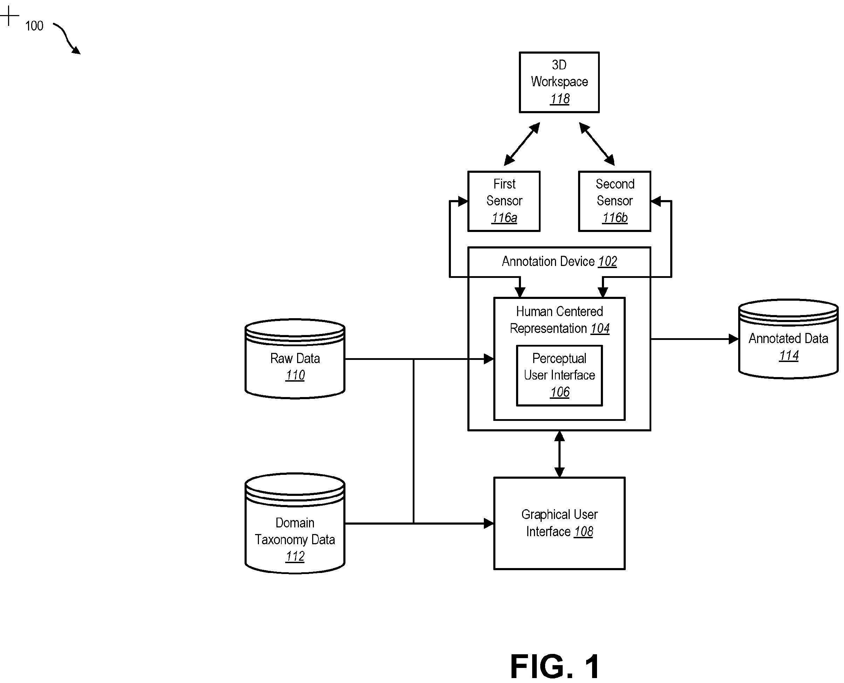

FIG. 1 illustrates a block diagram of an example environment 100 for data annotation of raw data 110, in accordance with at least one aspect described in the present disclosure. The environment 100 may include an annotation device 102, a graphical user interface (GUI) 108, the raw data 110, domain taxonomy data 112, annotated data 114, a first sensor 116a, a second sensor 116b, and a 3D workspace 118. The first sensor 116a and the second sensor 116b are generally referred to in the present disclosure as sensors 116.

The annotation device 102 may include a human centered representation 104 and a PUI 106. In addition, the annotation device 102 may include a memory (not illustrated) and a processor (not illustrated). The memory may include computer-readable instructions stored thereon. The processor may be operatively coupled to the memory. The processor may read and execute the computer-readable instructions stored in the memory to perform or control performance of operations of the annotation device 102.

The raw data 110 may include 4D data representative of features within an environment (e.g., a second scene) over a period of time. The raw data 110 may include multiple frames that represent the environment over the period of time. For example, the raw data 110 may include 4D data obtained by a multimodal and multi-instance (MMI) arrangement of sensors within an operating environment of a mobile robot. In some aspects, the 4D data may include information representative of a height (e.g., Y coordinates) of the features, a width (e.g., X coordinates) of the features, a depth (e.g., Z coordinates) of the features, and a time coordinate (e.g., T coordinates) corresponding to a current frame.

The domain taxonomy data 112 may include unstructured labels that correspond to a particular application of SML. For example, the domain taxonomy data 112 may include labels that correspond to navigating an autonomous device within an environment.

The 3D workspace 118 may correspond to a second scene (e.g., a physical scene or tangible space) and any features physically positioned within the physical scene. In some aspects, the 3D workspace may include a volume that incorporates the physical scene. In these and other aspects, the 3D workspace may not be delineated in the physical world, but instead may be delineated in a virtual representation of the physical world. For example, the 3D workspace 118 may only be delineated in a virtual representation displayed in the human centered representation 104 through a VR headset, an AR headset, or any other appropriate display device.

The sensors 116 may be physically positioned relative to the 3D workspace 118. In addition, the sensors 116 may generate 4D sensor data corresponding to the 3D workspace 118. For example, the first sensor 116a may include a 3D sensor and the second sensor 116b may include a color sensor that generate information representative of coordinates and colors of the features within the 3D workspace 118. In some aspects, the information representative of the colors of the features within the 3D workspace 118 may include colors according to a RGB color space, a HSV color space, a LAB color space, or some combination thereof. In some aspects, the information representative of the colors of the features may indicate one or more coordinates particular colors are associated with.

In addition, the sensors 116 may include an accelerometer, a gyroscope, or some combination thereof. The accelerometer, the gyroscope, or combination thereof may indicate movement of the sensors 116, physical positioning of the sensors 116 relative to a Zenith corresponding to the 3D workspace, or some combination thereof.

In some aspects, the 4D sensor data may include points representative of the features within the 3D workspace 118. In these and other aspects, the 4D sensor data may include multiple frames representative of the 3D workspace at different periods of time.

The GUI 108 may include fields for the user to select labels from the domain taxonomy data 112. In addition, the GUI 108 may include fields to start, stop, pause, or some combination thereof the annotation process. Further, the GUI 108 may include fields to associate particular gestures of the user with a particular label from the domain taxonomy data 112. In some aspects, the GUI 108 may be displayed via a monitor (e.g., a computer monitor, a VR headset, an AR headset, etc.) to the user. In some aspects, the GUI 108 may provide user instructions to the user.

The annotation device 102 may display the volumetric representation of the raw data as the human centered representation 104. The human centered representation 104 may include a 3D representation of the raw data for the user to interact with during the annotation process. In addition, the display of the human centered representation 104 may include the PUI 106. The PUI 106 may include fields for the user to select labels from the domain taxonomy data 112. The PUI 106 may also include fields to start, stop, pause, or some combination thereof the annotation process. Further, the PUI 106 may include fields to associate particular gestures of the user with a particular label from the domain taxonomy data 112. In some aspects, the PUI 106 may provide user instructions to the user.

The annotation device 102 may receive the 4D sensor data representative of the 3D workspace 118 from the sensors 116. In some aspects, the annotation device may determine a physical position of the first sensor 116a relative to the second sensor 116b based on the 4D sensor data. In addition, the annotation device 102 may calibrate the 4D sensor data based on the physical position of the sensors 116 relative to each other. In some aspects, the sensors 116 may calibrate the 4D sensor data based on the physical position of the sensors 116 relative to each other.

The annotation device 102 may determine movement of the sensors relative to a previous frame within the 4D sensor data. For example, the annotation device 102 may determine whether the first sensor 116a moved relative the second sensor 116b between a first frame and a second frame. In addition, the annotation device 102 may calibrate the 4D sensor data based on the movement of the sensors 116 relative to each other between frames. In some aspects, the sensors 116 may calibrate the 4D sensor data based on the movement of the sensors 116 relative to each other between frames.

The annotation device 102 may determine a physical position of the sensors 116 relative to the 3D workspace. In some aspects, the annotation device 102 may determine the physical position of the sensors 116 based on sensor data generated by the accelerometers, the gyroscopes, or some combination thereof of the sensors 116. In addition, the annotation device 102 may calibrate the 4D sensor data based on the physical position of the sensors 116 relative to the 3D workspace 118.

The annotation device 102 may capture point clouds based on the points within the 4D sensor data. In some aspects, each point cloud may include a portion of the points within the 4D sensor data. In addition, the annotation device 102 may determine a time that corresponds to each frame of the 4D sensor data. For example, the annotation device 102 may determine a time stamp associated with one or more frames within the 4D sensor data. The annotation device 102 may identify points, point clouds, or some combination thereof within the 4D sensor data that represents occupancy of the 3D workspace 118.

The annotation device 102 may receive the raw data 110 (e.g., 4D data representative of the second scene). The annotation device 102 may determine a parameter of one or more 4D points within the raw data 110. For example, the annotation device 102 may determine a height (e.g., Y coordinates) of the 4D points, a width (e.g., X coordinates) of the 4D points, a depth (e.g., Z coordinates) of the 4D points, a time corresponding to the 4D points (e.g., T coordinates), a color of the 4D points, or some combination thereof.

The annotation device 102 may aggregate a portion of the frames within the raw data. In some aspects, the annotation device 102 may perform time slicing by aggregating features within multiple frames into a single aggregate feature that includes points representative of each of the features.

The annotation device 102 may generate a first octree representative of the 4D sensor data (e.g., the 3D workspace 118). The first octree may indicate occupation by a human limb within the 3D workspace 118. The annotation device 102 may generate the first octree based on the points within the 4D sensor data. The first octree may include discrete volumetric units (e.g., volume-elements or voxels) that include radiuses and sizes.

The annotation device 102 may also generate a second octree representative of the raw data (e.g., the second scene). The second octree may indicate occupation of the features within the second scene. The annotation device 102 may generate the second octree based on the points within the raw data 110. The second octree may include discrete volumetric units (e.g., volume-elements or voxels) that include radiuses and sizes.

The annotation device 102 may map the first octree and the second octree to a reference frame. In some aspects, the reference frame may include a single radius size and discrete volumetric unit size. The annotation device 102 may map the first octree and the second octree to the reference frame to cause the radiuses and discrete volumetric unit sizes to be uniform.

The annotation device 102 may determine whether there is an octree-to-octree intersection of the features in the raw data 110 and the human limbs within the 3D workspace 118 based on the reference frame. In some aspects, the annotation device 102 may determine whether discrete volumetric units of the first octree and discrete volumetric units of the second octree intersect a same or similar subspace within the reference frame.

Responsive to the annotation device 102 determining an octree-to-octree intersection is present, the annotation device 102 may annotate corresponding features within the raw data 110 based on the octree-to-octree intersection. For example, the annotation device 102 may label the corresponding features based on the gesture, the human limb, or other action by the user within the 3D workspace 118. The annotation device 102 may generate the annotated data 114 based on the octree-to-octree intersecting discrete volumetric units within the reference frame. The annotated data 114 may include buckets or other organization methods that arrange, order, segment, or any other appropriate organizational order corresponding features together within the annotated data 114.

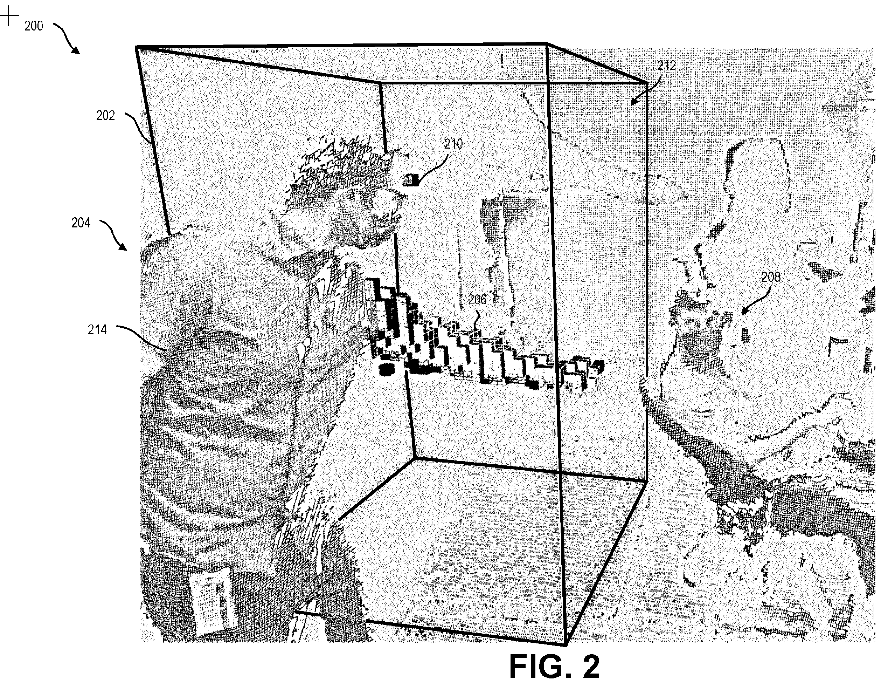

FIG. 2 illustrates a volumetric representation 200 of an example environment that includes a 3D workspace 202 for data annotation, in accordance with at least one aspect described in the present disclosure. The 3D workspace 202 may correspond to the 3D workspace 118 of FIG. 1. The 3D workspace 202 is illustrated in FIG. 2 for example purposes. In some aspects, the 3D workspace 202 may not be delineated in the volumetric representation 200. In other aspects, the 3D workspace 202 may be delineated in the volumetric representation 200. The volumetric representation 200 may include a virtual representation of features within the environment. The volumetric representation 200 may be generated based on the 4D sensor data.

The volumetric representation 200 may include a first subject 204 and a second subject 208 (both illustrated as humans in FIG. 2). The second subject 208 may be physically positioned external to or outside the 3D workspace 202. A portion 214 (e.g., a torso, legs, a portion of a head, and an arm) of the first subject 204 may by physically positioned external to or outside the 3D workspace 202. The volumetric representation 200 may also include a background surface 212. In some aspects, the background surface 212 may form a boundary of the 3D workspace 202. In other aspects, the background surface 212 may be physically positioned a distance away from the boundaries of the 3D workspace 202.

As illustrated in FIG. 2, a portion of the first subject 204 may be physically positioned within the 3D workspace 202. For example, the portion of the first subject 204 physically positioned within the 3D workspace 202 may include an arm 206 and a portion of the head 210.

Portions of the environment 200 external to or outside of the 3D workspace 202 may be represented as non-discrete volumetric unit representations. For example, the second subject 208, the background surface 212, or some combination thereof may be represented as a non-discrete volumetric unit representations that indicate features of the second subject 208, the background surface 212, or some combination thereof. The non-discrete volumetric unit representations may include lines, shades, or other representations that indicate the corresponding features. In some aspects, the portion of the environment external to or outside the 3D workspace 202 may not be included in the volumetric representation 200.

Portions of the environment 200 within the 3D workspace 202 may be illustrated as discrete volumetric unit representations that indicate the corresponding features. For example, as illustrated in FIG. 2, the arm 206 and the portion of the head 210 within the 3D workspace 202 are illustrated as discrete volumetric unit representations. The discrete volumetric unit representations may include voxels (e.g., cubes other volume based shapes) that represent the corresponding features.

The 3D workspace 202 may define a portion of the environment 200 in which a volumetric representation of the raw data may be displayed. The volumetric representation of the raw data is not illustrated in FIG. 2 for ease of illustration. As illustrated in FIG. 2, the arm 206 may be interacting with a portion of the volumetric representation of the raw data within the 3D workspace 202. An octree-to-octree intersection of the arm 206 and features of the raw data may be determined as discussed elsewhere in the present disclosure.

In some aspects, features of subjects that are physically positioned within the 3D workspace 202 (e.g., the portion of the head 210) may be identified as not corresponding to a selected limb and may be filtered as discussed elsewhere in the present disclosure.

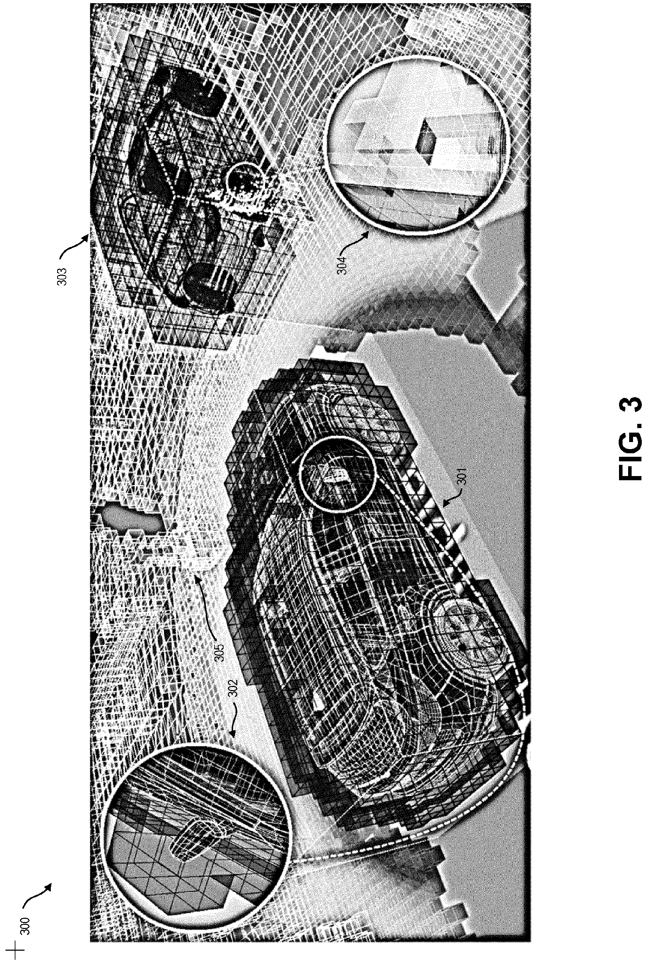

FIG. 3 illustrates an example volumetric representation 300 of the raw data that may be displayed in the 3D workspaces 118, 202 of FIGs. 1 and 2, in accordance with at least one aspect described in the present disclosure. The volumetric representation 300 may include a virtual representation of features within the raw data.

The volumetric representation 300 may include a first feature 301 and a second feature 303 (both illustrated as vehicles in FIG. 3). FIG. 3 also illustrates a detailed view 302 of a portion of the first feature 301 and a detailed view 304 of a portion of the second feature 303. The volumetric representation 300 may also include a third feature 305. The raw data may represent the environment from the perspective of the first feature 301 (e.g., the vehicle represented as the first feature 301 may include sensors for generating the 4D raw data when traversing the environment). In some aspects, the third feature 305 may represent a sign, a pedestrian, an animal, a tree, or any other appropriate feature within the environment.

In some aspects, the user may interact with the volumetric representation 300 within the 3D workspace to annotate the raw data and label the features as discussed elsewhere in the present disclosure. For example, the user may label the second feature 303 as a vehicle (in particular the user may select the detailed view 304 of the second feature 303 as corresponding to a tire of the second feature 303) as discussed elsewhere in the present disclosure. As another example, the user may label the detailed view 302 of the first feature 301 as corresponding to a side view mirror of the first feature 301 as discussed elsewhere in the present disclosure. As yet another example, the user may label the third feature 305 as a sign, a pedestrian, an animal, a tree, or any other appropriate feature.

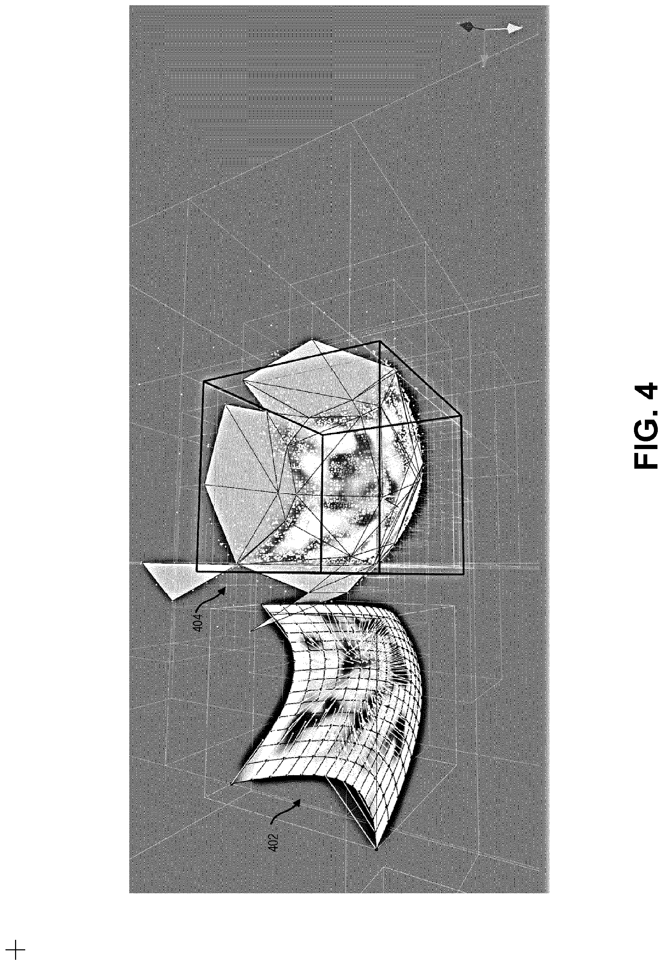

FIG. 4 illustrates example surface manifolds 402, 404 that may be selected by a user within the 3D workspaces 118, 202 of FIGs. 1 and 2, in accordance with at least one aspect described in the present disclosure. The surface manifolds 402, 404 may be generated based on user input within the 3D workspace. For example, the user input may select multiple points within the volumetric representation 300 of FIG. 3 that are to form a continuous surface (e.g., the surface manifold 402, 404). Each feature of the volumetric representation 300 that is within the surface manifolds 402, 404 may be labelled accordingly.

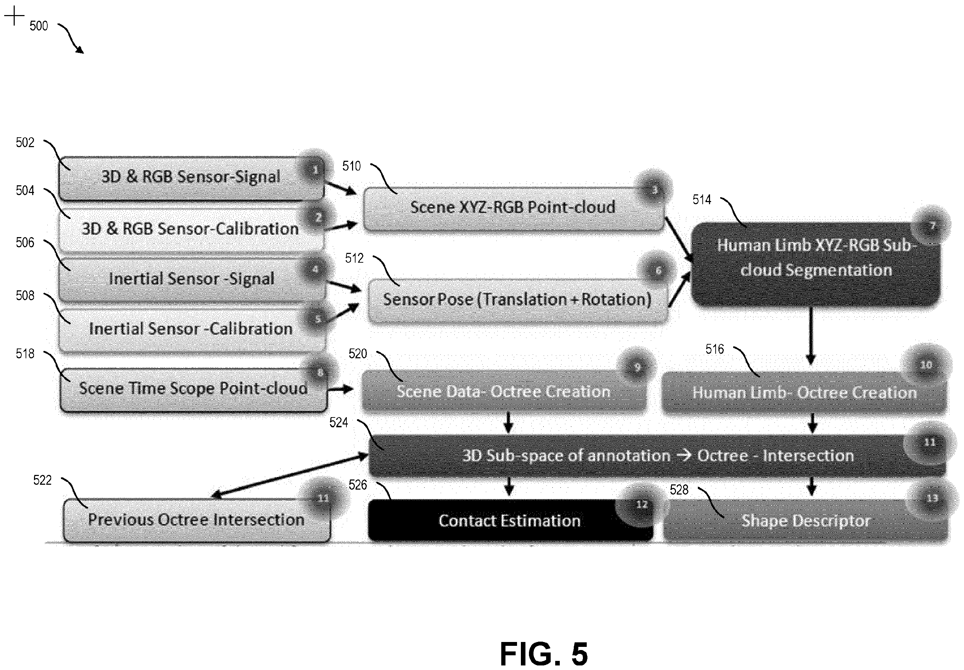

FIG. 5 illustrates an example flowchart of a method 500 to annotate the raw data using a volumetric representation of the raw data and the 3D workspace, in accordance with at least one aspect described in the present disclosure. The method 500 may be performed by any suitable system, apparatus, or device with respect to annotate raw data. For example, the annotation device 102, the sensors 116, the GUI 108, the PUI 106, or some combination thereof of FIG. 1 may perform or direct performance of one or more of the operations associated with the method 500. The method 500 may include one or more blocks 502, 504, 506, 508, 510, 512, 514, 516, 518, 520, 522, 524, 526, and 528. Although illustrated with discrete blocks, the operations associated with one or more of the blocks of the method 500 may be divided into additional blocks, combined into fewer blocks, or eliminated, depending on the particular implementation.

At block 502, the annotation device may receive a 3D and RGB sensor signal. In some aspects, the 3D and RGB sensor signal may correspond to the 4D sensor data. In some aspects, the sensors may generate the 4D sensor data to indicate a depth and color of features within the 3D workspace. In some aspects, the sensors may generate the 4D sensor data to include a point cloud (e.g., a collection of points) at a current time of a corresponding frame. The annotation device may capture and represent the point clouds according to Equation 1.

$$\{X_i \in R^3\}^{0 \leq i < n} \qquad \text{Equation 1}$$

In Equation 1, n represents a number of points within the corresponding point cloud, $X_i$ represents a point in 3D space, i represents an integer indicating a current point, and $R^3$ represents Euclidean space over reals. In some aspects, the Euclidian space may include n-1 dimensions. The annotation device may capture and represent point flows of the point clouds for multiple frames over a period of time according to Equation 2.

$$\{X_i \in R^4\}^{0 \leq i < n} \qquad \text{Equation 2}$$

In Equation 2, $X_i$ represents a current point in the Euclidean space, i represents the integer indicating the current point, $R^4$ represents the Euclidean space including a temporal dimension over reals, and n represents the number of points within the corresponding point cloud. The sensors may perform time slicing according to Equation 2, which may aggregate multiple frames into a single, static frame. In some aspects, the sensors may provide the 4D sensor data that indicates texture or appearance of features within the 3D workspace. The annotation device may determine the 4D sensor data that indicates texture or appearance of features within the 3D workspace over a period of time according to Equation 3.

$$I_{[t0,t1]}(u,v) \rightarrow \{C \in R^h\} \qquad \text{Equation 3}$$

In Equation 3, C represents a color, R represents the Euclidian space, $I_{[t0,t1]}$ represents a time range of current frames, and h represents an integer indicating a number of dimension within the Euclidian space. Block 502 may be followed by block 510.

At block 504, the annotation device or the sensors may perform 3D and RGB sensor calibration. For example, the annotation device or the sensors may calibrate the 4D sensor data based on a physical position of the sensors relative to each other, the 3D workspace, or some combination thereof.

The annotation device or the sensors may perform a kinematic transformation of a sensor frame to a point cloud frame according to Equation 4 and Equation 5.

$$T_C^P \in SE^3 \qquad \text{Equation 4}$$

$$K \in R^{\{3x3\}} \qquad \text{Equation 5}$$

In Equation 4, P represents the point cloud frame, C represents the sensor frame, T represents a 4x4 rigid transformation matrix, $SE^3$ represents a rigid transformation. In Equation 5, K represents a projection matrix of the kinematic transformation. The sensor or the annotation device may determine a color associated with each point according to Equation 6.

$$\Psi(X_i \in R^3, T_C^P \in SE^3, K \in R^{\{3x3\}}) \rightarrow C_i \in R^h \qquad \text{Equation 6}$$

In Equation 6, $X_i \in R^3$ represents the point flows, $T_C^P \in SE^3$, $K \in R^{\{3x3\}}$ represents the kinematic transformation of Equation 4 and Equation 5, $X_i$ represents a location of a current point, $C_i$ represents a color of the current point, $T_C^P$ represents color and depth data, R represents the Euclidian space, h represents an integer indicating a number of dimension within the Euclidian space and $R^3$ represents Euclidean space including a temporal dimension over reals. Block 504 may be followed by block 510.

At block 506, the annotation device may receive an inertial sensor signal. In some aspects, the sensors may include an inertial measurement unit (IMU) (e.g., an accelerometer, a gyroscope, or some combination thereof). The IMU may provide a linear acceleration, a rotational velocity, or some combination thereof of the sensors used to determine the kinematic transformation. The annotation device may calibrate the 4D sensor data based on the linear acceleration, the rotational velocity, or some combination thereof. The annotation device or the sensors may determine a current kinematic frame compared to a previous kinematic frame (e.g., an initial Earth kinematic frame) according to Equation 7.

$$\Gamma(\ddot{v}_i, \ddot{r}_i, T_{i-1_E}^S, w) \mapsto T_{i_E}^S \qquad \text{Equation 7}$$

In Equation 7, $T_{i-1_E}^S$ represents a current kinematic frame with respect to the Zenith orientation, $T_{i-1_E}^S$ represents a previous kinematic frame with respect to the Zenith orientation, $\ddot{v}_i$ represents a rotation acceleration between frames, w represents a relative velocity between frames, and $\ddot{r}_i$ represents a linear acceleration between frames. Block 506 may be followed by block 512.

At block 508, the annotation device or the sensors may perform inertial sensor calibration. In some aspects, the annotation device or the sensors may calibrate the 4D sensor data based on the direction of a Zenith corresponding to the 3D workspace relative to the sensors. For example, the annotation device or the sensor may calibrate the 4D sensor data relative to a horizon of the Earth. The annotation device or the sensors may filter out noisy inertial measurements from the 4D sensor data. Block 508 may be followed by block 512.

At block 510, the annotation device may generate a scene XYZ-RGB point cloud. In some aspects, the annotation device may determine a physical location and corresponding color of each point in the 4D sensor data. The physical location and corresponding color of the points in the 4D sensor data may represent the scene. Block 510 may be followed by block 514.

At block 512, the annotation device may perform sensor pose translation and rotation. In some aspects, the annotation device may translate the kinematic frame representative of the 3D workspace to a reference frame according to Equation 8.

$$T_{i_E}^S \cdot G_c \mapsto T_k \qquad \text{Equation 8}$$

In Equation 8, $T_{i_E}^S$ represents the kinematic frame with respect to the Zenith orientation, $G_c$ represents an application-space boundary frame (e.g., a calibration matrix), and $T_k$ represents a composed transformation which maps the 3D points of the 3D workspace the application-space boundary frame (e.g., the mapped reference frame). Block 512 may be followed by block 514.

At block 514, the annotation device may perform human limb XYZ-RGB sub cloud segmentation to identify features within the 4D sensor data that correspond to a human limb. In some aspects, the annotation device may identify the features that correspond to the human limb using a classifier according to Equation 9.

$$\forall X_i \in P_{[t0,t1]} \wedge \exists\, I_{[t0,t1]}\,(u,v)\,|\,\Psi(X_i,\, T_C^P,\, K) \Longrightarrow (X_i,\, C_i) \qquad \text{Equation 9}$$

In Equation 9, $P_{[t0,t1]}$ represents a current point cloud, $X_i$ represents a location of a current point, $C_i$ represents a color of the current point, $T_C^P$ represents color and depth data, K represents the projection matrix of the kinematic transformation, and $I_{[t0,t1]}$ represents a time range of current frames.

In some aspects, the annotation device may identify the features that correspond to the human limb using a classifier according to Equation 10.

$$\beta(X_i,\, C_i.\, P_{[t0,t1]},\, P_{[t1,t2]},) \mapsto \{0,\, LA := 1,\, RA := 2,\, RL := 3,\, LL := 4\} \subset N \qquad \text{Equation 10}$$

In Equation 10, $P_{[t0,t1]}$ represents a previous point cloud, $P_{[t1,t2]}$ represents a current point cloud, $X_i$ represents a location of a current point, $C_i$ represents a color of the current point, LA represents a left arm feature, RA represents a right arm feature, RL represents a right leg feature, LL represents a left leg feature, 0 represents an unidentified feature, and N represents a set of positive integers. In some aspects, N may represent the set of positive integers excluding zero. In other aspects, N may represent the set of positive integers including zero.

In some aspects, the annotation device may map the colors from one color space to another color space. For example, the annotation device may map the colors from a RGB color space, a HSV color space, a LAB color space, or some combination thereof to a different color space. In some aspect, the annotation device may perform surface modelling to identify the features that correspond to the human limb. Block 514 may be followed by block 516.

At block 516, the annotation device may create a human limb octree. In some aspects, the annotation device may generate the first octree (e.g., the human limb octree) based on the features that correspond to the human limb. In these and other aspects, the first octree may include multiple discrete volumetric units (e.g., voxels). The size of the discrete volumetric units may be variable based on an application or the 4D sensor data.

The first octree may include root nodes (e.g., eight root nodes). The annotation device may determine whether each of the root nodes are occupied (e.g., include a point corresponding to the human limb). If a root node is occupied, the annotation device may divide the corresponding root node into multiple children nodes (e.g., eight children nodes). The annotation device may repeat this process with each generation of nodes until a pre-defined number of generations of nodes are generated.

The first octree may include a discrete volumetric unit representations of the human limb within the 3D workspace such that Equation 11 is met.

$$X_i \Longrightarrow \beta(X_i,\, C_i.\, P_{[t0,t1]},\, P_{[t1,t2]},) \mapsto p \qquad \text{Equation 11}$$

In Equation 11, $P_{[t0,t1]}$ represents a previous point cloud, $P_{[t1,t2]}$ represents a current point cloud, $X_i$ represents a location of a current point, $C_i$ represents a color of the current point, and p represents a voxel world-registered containing the current point $X_i$.

The annotation device may create the root nodes that corresponds to a first point in a point according to Equation 12.

$$\{(X_0 \cdot \hat{x}) - R_0 \leq x < (X_0 \cdot \hat{x}) + R_0\} \times \{(X_0 \cdot \hat{y}) - R_0 \leq y < (X_0 \cdot \hat{y}) + R_0\} \times \{(X_0 \cdot \hat{z}) - R_0 \leq z < (X_0 \cdot \hat{z})$$
$$+ R_0\} \subset R^3 \qquad \text{Equation 12}$$

In equation 12, $\hat{x}$, $\hat{y}$, and $\hat{z}$ represent basis vectors spanning the Euclidian space, Xo represents a discrete volumetric unit center, $R_0$ represents a radius of the discrete volumetric units, and x, y, and z represent corresponding determined coordinates.

In some aspects, if $X_i \notin V(Xo, Ro)$, the annotation device may generate the children nodes according to a re-routing according to Equation 13.

$$V(X_0, R_0 \cdot 2^m) \qquad \text{Equation 13}$$

In Equation 13, m represent an integer that is greater than or equal to 1, Xo represents a point center of a Euclidian space, $R_0$ represents a radius of a root discrete volumetric units. If a point is contained within the root-node but it is not stored inside a leaf-node, the annotation device may perform a discrete volumetric unit insertion according to Equation 14.

$$H(X_a, X_b) \mapsto \{0 \leq i \leq 7\} \qquad \text{Equation 14}$$

In Equation 14, $X_a$ represents a first point in the corresponding 3D space, $X_b$ represents a second point in the corresponding 3D space. In some aspects, the annotation device may use Equation 14 (e.g., function H) to determine an insertion index of nodes from one respect to another respect. In some aspects, the annotation device may perform the insertion process recursively. In these and other aspects, the function H may be fixed based on whether an index to space mapping is created. Block 516 may be followed by block 524.

At block 518, the annotation device may generate a scene time scope point cloud. In some aspects, the annotation device may determine a physical location and corresponding color of each point in the raw data. The physical location and corresponding color of the points in the raw data may represent a scene.

The annotation device may partition the raw data into time intervals (e.g., time slices). In some aspects, the annotation device may perform time slicing of the raw data to generate single aggregated frames that each represent multiple frames within the raw data. The single frames may include aggregated features that represent each feature within the corresponding frames. The aggregated features may be displayed in the volumetric representation of the raw data as if each feature in the corresponding frames occurred simultaneously. Block 518 may be followed by block 520.

At block 520, the annotation device may create a scene data octree. In some aspects, the annotation device may generate the second octree (e.g., the scene data octree) based on the features within the raw data. In these and other aspects, the second octree may include multiple discrete volumetric units (e.g., voxels). The size of the discrete volumetric units may be variable based on an application or the 4D sensor data.

The second octree may include root nodes (e.g., eight root nodes). The annotation device may determine whether each of the root nodes are occupied (e.g., include a point corresponding to a feature). If a root node is occupied, the annotation device may divide the corresponding root node into multiple children nodes (e.g., eight children nodes). The annotation device may repeat this process with each generation of nodes until a pre-defined number of generations of nodes are generated.

The second octree may include a discrete volumetric unit representation of the features within the raw data such that Equation 11 is met using the raw data instead of the 4D sensor data. The annotation device may create the root nodes according to Equation 12 using the raw data instead of the 4D sensor data. The annotation device may indicate points that are within the root nodes as discrete volumetric units. In some aspects, if $X_i \notin V(Xo, Ro)$, the annotation device may generate the children nodes according to a re-routing according to Equation 13 using the raw data instead of the 4D sensor data. If a point is contained within the root-node but it is not stored inside a leaf-node, the annotation device may perform a discrete volumetric unit insertion according to Equation 14 using the raw data instead of the 4D sensor data. Block 520 may be followed by block 524.

At block 522, the annotation device may determine if the second octree intersects with a previous octree. In some aspects, the annotation device may identify the previous octree that relates to the second octree. The annotation device may compare the previous octree to the second octree to determine if features within the second octree have already been annotated. In some aspects, if a feature has already been annotated, the annotation device may prevent any further annotations. Block 522 may be followed by block 524.

At block 524, the annotation device may perform 3D subspace annotation of the first octree and the second octree based on an intersection of the first octree and the second octree. In some aspects, the annotation device may map the first octree and the second octree to a reference frame. In these and other aspects, the annotation device may determine a scalar volume created by the first octree and another scalar volume created by the second octree. The annotation device may map the first octree and the second octree to the reference frame based on the scalar volumes.

In some aspects, if a discrete volumetric unit is occupied, the annotation device may output a discrete volumetric unit of uniform size according to Equation 15

$$\text{ⴔ}(xa, ra, xb, rb, m) \rightarrow V(\boldsymbol{x}\{\boldsymbol{a} \wedge \boldsymbol{b}\}, \max(ra, rb)\%m) \qquad \text{Equation 15}$$

In Equation 15, $x_a$ represents a center of the discrete volumetric unit in the first octree, $r_a$ represents a radius of the discrete volumetric unit in the first octree, $x_b$ represents the center of a discrete volumetric unit in the second octree, $r_b$ represents a radius of the discrete volumetric unit in the second octree, and $\%m$ represents a pre-defined target radius of the reference frame.

In some aspects, the annotation device may determine if two discrete volumetric units within the reference frame include the same or similar subspace according to Equation 16.

$$\oplus(x_a, r_a, x_b, r_b) \mapsto \{0,1\} \qquad \text{Equation 16}$$

In Equation 16, $x_a$ represents the center of a first discrete volumetric unit, $x_b$ represents the center of a second discrete volumetric unit, $r_a$ represents a radius of the first discrete volumetric unit, and $r_b$ represents the radius of the second discrete volumetric unit.

In some aspects, if two discrete volumetric units include an octree-to-octree intersection, the annotation device may annotate the corresponding feature in the raw data accordingly. Block 524 may be followed by block 526 and block 528.

At block 526, the annotation device may perform contact estimation. In some aspects, the annotation device may determine an amount the first octree and the second octree intersect. The annotation device may implement a sorted list of data points according to the distance from the most external nodes to the internal nodes that the first octree and the second octree intersect.

At block 528, the annotation device may perform shape descriptor. In some aspects, the annotation device may determine if the user indicated a surface manifold is to be generated based on the octree-to-octree intersecting discrete volumetric units. The annotation device may determine a push pull surface operator based on the surface manifolds.

Modifications, additions, or omissions may be made to the method 500 without departing from the scope of the present disclosure. For example, the operations of method 500 may be implemented in differing order. Additionally or alternatively, two or more operations may be performed at the same time. Furthermore, the outlined operations and actions are only provided as examples, and some of the operations and actions may be optional, combined into fewer operations and actions, or expanded into additional operations and actions without detracting from the essence of the described aspects.

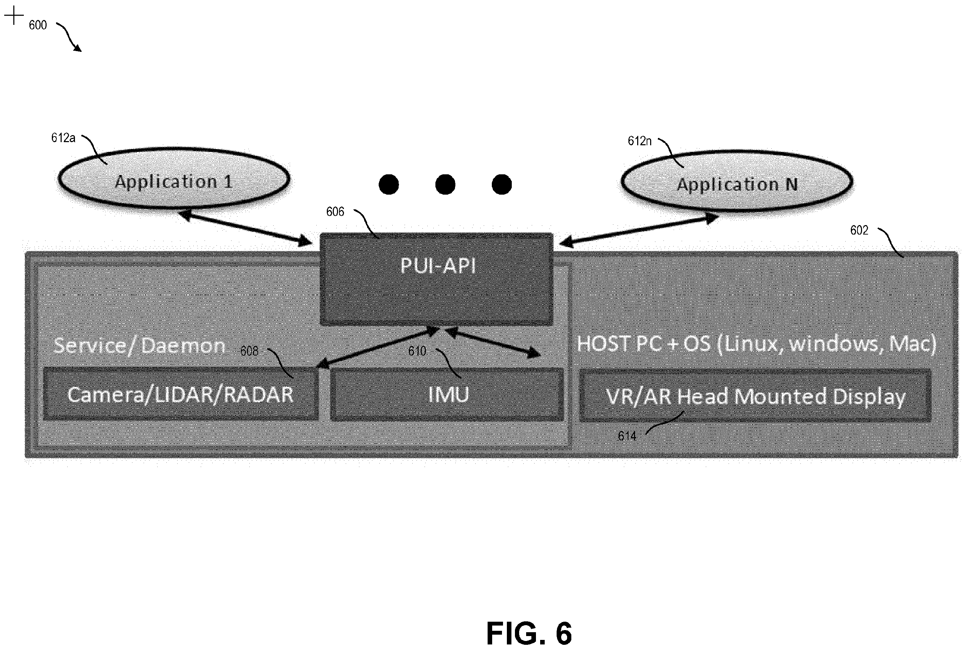

FIG. 6 illustrates an example system 600 for providing a PUI 606, in accordance with at least one aspect described in the present disclosure. The system 600 may include an annotation system 602 and multiple applications 612a-n. The annotation system 602 may include a sensor 608, an IMU 610, the PUI 606, and a display 614. The display may include a VR display, an AR display, or any other type of display. The sensor 608 may include a camera, a light detection and ranging (LIDAR) sensor, radio detection and ranging (RADAR) sensor. The IMU 610 may include an accelerometer, a gyroscope, or any other appropriate inertial sensor.

The user may interact with the PUI 606 to generate the annotated data. The applications 612a-n may include different machine learning algorithms that use the annotated data to perform SML

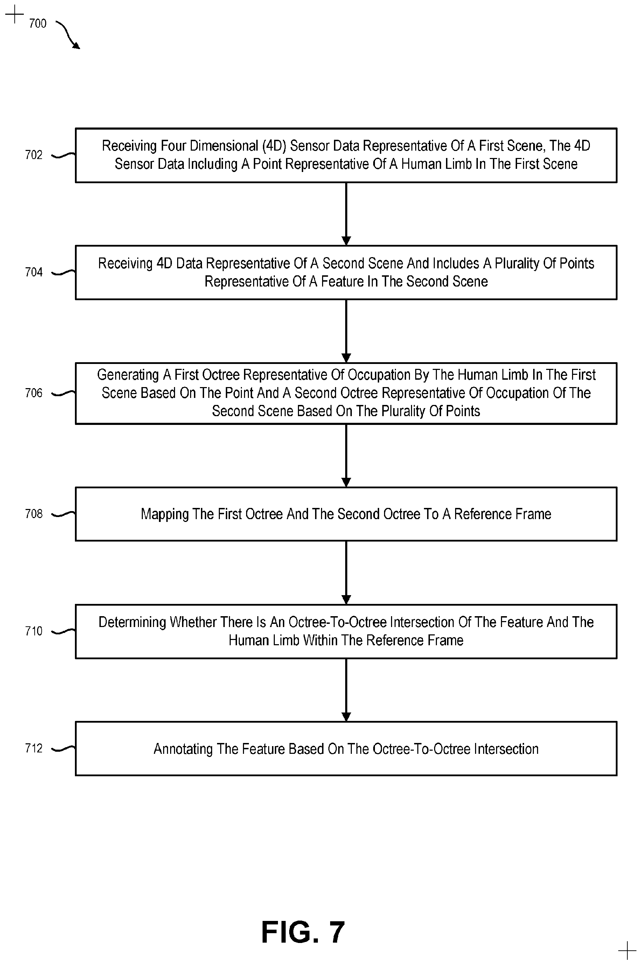

FIG. 7 illustrates an example flowchart of annotating a feature within the raw data, in accordance with at least one aspect described in the present disclosure. The method 700 may include receiving 4D sensor data representative of a first scene, the 4D sensor data including a point representative of a human limb in the first scene 702; receiving 4D data representative of a second scene and includes a plurality of points representative of a feature in the second scene 704; generating a first octree representative of occupation by the human limb in the first scene based on the point and a second octree representative of occupation of the second scene based on the plurality of points 706; mapping the first octree and the second octree to a reference frame 708; determining whether there is an octree-to-octree intersection of the feature and the human limb within the reference frame 710; and annotating the feature based on the octree-to-octree intersection.

The computing device may generate a SML model based on annotated data. To generate the annotated data, a user may assess raw data and identify features to determine which labels to associate with features within the raw data. The user may select the labels from a pre-defined taxonomy of labels. In some aspects, the pre-defined taxonomy of labels may be based on an application of the SML. The computing device may perform the SML using the annotated data to identify features in an environment that are the same as similar to the labelled features in the annotated data.

In some aspects, a human-centric representation of the raw data may be generated that reduces human perceptual workload and increases efficiency of the annotation process. These and other aspects may extend a human-computer interaction (HCI) by generating and displaying a volumetric representation of the raw data that permits the user to interact with the representation. In addition, these and other aspects may extent the HCI by generating a volumetric representation of human limbs within a 3D workspace.

In some aspects, the raw data may include 4D sensor data generated by 3D multimodal sensors and color cameras. An annotation device may bidirectionally bridge immersive and interactive representations of raw data with a physical embodiment of the user within the 3D workspace. In some aspects, the annotation device may bridge the representations though Boolean hyper-voxel operation interaction models of the user and the volumetric representation of the raw data. For example, the annotation device may determine a volumetric discretization of human limbs physically positioned within the 3D workspace through dense visual reconstruction and sparse voxelization.

The annotation device may display the raw data as immersive and interactive representations that is grounded in virtual objects to provide efficient annotation control and feedback for the user. For example, the user may virtually grasp and manipulate features defining oriented implicit surfaces as means to label the features.

The annotation device may perform discrete space management via discrete volumetric units (e.g., volume-elements or voxels) that include radiuses and sizes. The annotation device may perform union, intersection, subtraction, inversion, or any other appropriate operation to identify features that are to be labelled in the raw data. For example, the annotation device may perform point and feature-touching, 3D/4D region-selecting, 3D/4D region enclosing envelope-pushing and pulling among other sculpting modifiers.

The annotation device may split, splat, merge, or some combination thereof the 4D sensor data and the raw data via bendable mathematical transformation such as Boolean set expressions, generalized continuous projections, and sweeping discrete volumes. Sensors may capture the actions of the user within the 3D workspace. The sensors may generate the 4D sensor data. The annotation device may calibrate the 4D sensor data to adjust visual control points by reshaping oriented implicitly functions for segmentation, apply push or pull sculpting modifiers to finely bend 3D/4D segmentation marking-boundaries, translate, scale, and rotate entities (geometric primitives and controlling gizmos) divining the annotation process, or some combination thereof.

A system may include an annotation device, sensors, and a PUI to receive user input and provide user instructions. The annotation device may include a memory and a processor. The memory may include computer-readable instructions stored thereon. The processor may be operatively coupled to the memory. The processor may read and execute the computer-readable instructions to perform or control performance of operations of the annotation device.

The sensors may generate the 4D sensor data. In some aspects, the sensors may include a 3D sensor, a color sensor, a 3D active camera, a stereo camera, a LIDAR, a RADAR, or some combination thereof. The sensors may be configured to capture and generate the 4D sensor data based on 4D space-occupancy, user gestures, user motions, virtual-manipulations by the user, or some combination thereof via computational geometry and machine vision. In addition, one or more of the sensors may include accelerometers, gyroscopes, or some combination thereof.

The annotation device may receive the 4D sensor data. The 4D sensor data may be representative of a first scene. The 4D sensor data may include points representative of human limbs in the first scene. In some aspects, the first scene may correspond to the 3D workspace. The 4D sensor data may include structural information of the 3D workspace to capture a physical scene. In some aspects, the points within the 4D sensor data may include 4D points.

In some aspects, the 4D sensor data may include color data corresponding to the points within the 4D sensor data. In some aspect, the color data may be generated according to at least one of a RGB color space, a HSV color space, and a LAB color space. The 4D sensor data may include frames representative of the 3D workspace over a period of time. Each frame within the raw data may be representative of the 3D workspace at a particular point in time. The 4D sensor data may include a collection of 3D points depicting the first scene containing the user and some empty space within the 3D workspace.

The annotation device may determine a physical position of the sensors relative to each other. For example, the annotation device may determine a physical position of a 3D sensor relative to a color sensor. The annotation device may calibrate the 4D sensor data based on the physical position of the sensors relative to each other. In some aspects, the annotation device may calibrate the sensors, the 4D sensor data, or some combination thereof according to Equation 6. In some aspects, the sensors may perform the calibration steps described in the present disclosure.

The annotation device may determine movement of the sensors relative to each other, the 3D workspace, or some combination thereof between frames. For example, the annotation device may determine movement of a 3D sensor relative to a color sensor between a previous frame and a current frame within the 4D sensor data. The annotation device may calibrate the 4D sensor data based on the movement of the sensors relative to the 3D workspace, each other, or some combination thereof between the frames.

In some aspects, the annotation device may determine a parameter of each 4D point in the 4D sensor data. In these and other aspects, the annotation device may determine an X coordinate, a Y coordinate, a Z coordinate, a time coordinate, or some combination thereof of each 4D point relative to the 3D workspace. In addition, the annotation device may determine a color that corresponds to one or more of the 4D points in the 4D sensor data.

The annotation device may identify points within the 4D sensor data that correspond to human limbs within the 3D workspace. In some aspects, the annotation device may identify the points that correspond to human limbs according to Equation 10. In some aspects, Equation 10 may include a function to map point $X_i$ in 3D space with associated color $C_i$ by exploiting a current point cloud $P_{[t1,t2]}$ and previous point cloud $P_{[t0,t1]}$. The previous point cloud and the current point cloud may operate as contextual cues to permit the annotation device to determine whether the current point belongs to the numerical labels in the set { LA = Left-arm category, RA = Right-arm category, LL = Left-leg category, and RL = Right-leg category}. In some aspects, if the current point does not belong to the numerical labels, the annotation device may label the point as "0" indicating that the current point does not belong to the numerical labels.

In some aspects, the annotation device may determine a physical position of the sensors relative to a Zenith of the 3D workspace. For example, the sensors may implement the accelerometers to detect the physical position of the sensors relative to the Zenith of the 3D workspace.

The annotation device may capture point clouds within the 4D sensor data. Each point cloud may include a portion of the points within the 4D sensor data. In some aspects, the annotation device may capture and represent the point clouds according to Equation 1. The annotation device may determine a time stamp of each point. In some aspects, the annotation device may capture and represent point flows of the point clouds for multiple frames over a period of time according to Equation 2.

The annotation device may identify points within the 4D sensor data that correspond to human limbs. In some aspects, annotation device may determine the 4D sensor data that indicates texture or appearance of features within the 3D workspace over a period of time according to Equation 3. In some aspects, the annotation device may identify the features that correspond to the human limb using a classifier according to Equation 9. In other aspects, the annotation device may identify the features that correspond to the human limbs using a classifier according to Equation 10.

The annotation device may receive the raw data (e.g., 4D data) representative of a second scene. The raw data may include points representative of features in the second scene. In some aspects, the raw data may include multiple frames representative of the second scene. In some aspects, the annotation device may aggregate different groups of the frames into different single frames. The single frames may include points representative of the features in the corresponding groups of frames. The raw data may include points representative of features in the second scene

The annotation device may generate a first octree representative of occupation by human limbs in the 3D workspace. The annotation device may generate the first octree based on the points within the 4D sensor data. The annotation device may generate a kinematic frame representative of the 4D sensor data. In some aspects, the annotation device may perform a kinematic transformation of a sensor frame to a point cloud frame according to Equation 4 and Equation 5.

The annotation device may map the kinematic frame to a pre-defined reference frame. In some aspects, the annotation device may map the kinematic frame to the pre-defined reference frame according to Equation 8. For example, the annotation device may map 3D points of the 3D workspace to an annotation-chaperone frame (e.g., the reference frame). The annotation device may compare a current kinematic frame compared to a previous kinematic frame (e.g., an initial Earth kinematic frame) according to Equation 7.

The annotation device may generate a plurality of root nodes based on the 4D sensor data according to Equation 12. The annotation device may determine if each node is occupied. If a node is occupied, the annotation device may divide the corresponding node into multiple children nodes. Each point within the root nodes and the children nodes may include discrete volumetric unit (e.g., voxel) representations of human limbs in the 3D workspace. The annotation device may generate the children nodes according to Equation 13.

In some aspects, if a point is contained within a root-node but is not within a leaf-node of the first octree, the annotation device may perform a discrete volumetric unit insertion according to Equation 14. The first octree may include a discrete volumetric unit representations of the human limb within the 3D workspace such that Equation 11 is met.

The annotation device may generate a second octree representative of occupation of the second scene based on the plurality of points. The annotation device may generate nodes within the second octree based on the raw data according to Equation 12. That annotation device may create a volumetric description as the root nodes for the first octree using Equation 12. In Equation 12, $\hat{x}$, $\hat{y}$, and $\hat{z}$ may represent unitary basis vectors [1,0,0], [0,1,0], and [0,0,1], respectively.

The annotation device may determine if each node within the second octree is occupied. Responsive to a node being occupied, the annotation device may divide the corresponding node into multiple children nodes. The annotation device may generate the second octree such that each point within the nodes are contained within discrete volumetric units that represent the features in the second scene. The annotation device may generate the second octree so as to include a discrete volumetric unit representations of the human limb within the 3D workspace such that Equation 11.

In some aspects, the annotation device may align time between frames within the 4D sensor data, the raw data, or some combination thereof. The annotation device may align the time between the 4D sensor data and the raw data via a time-scope. The alignment of the time between the 4D sensor data and the raw data may permit the user to select the time windows to annotate.

The annotation device may map the first octree and the second octree to a reference frame. The annotation device may translate the kinematic frame representative of the 3D workspace to a reference frame according to Equation 8. In addition, the annotation device may translate the kinematic frame representative of the raw data to the reference frame according to Equation 8.

The annotation device may determine a first scalar volume of the first octree and a second scalar volume of the second octree. The annotation device may compare the first scalar volume to the second scalar volume. In addition, the annotation device may map the first octree and the second octree to each other based on the comparison. In some aspects, the annotation device may adjust a size of at least one of the nodes in the first octree and at least one of the nodes in the second octree to cause the radiuses and sizes discrete volumetric units within the reference frame to be uniform according to Equation 15.

The annotation device may determine whether there is an octree-to-octree intersection of the features and the human limb within the reference frame. In some aspects, the annotation device may determine whether nodes in the first octree and nodes in the second octree include similar subspace within the reference frame. The annotation device may determine whether nodes in the first octree and nodes in the second octree includes similar subspace within the reference frame according to Equation 17.

$$\odot (Voctree) \rightarrow R+ \quad \text{Equation 17}$$

In Equation 17, Voctree represents the entire first octree or the entire second octree and R+ represents an integer that is greater than zero. The annotation device may determine the octree-to-octree intersection based on nodes in the first octree and nodes in the second octree that occupy the same or the similar subspace within the reference frame. The annotation device may annotate the feature based on the octree-to-octree intersection.

The annotation device may determine whether the user input indicates a surface description that indicates a continuous surface within the second scene is to be annotated. In some aspects, the annotation device may annotate each feature within the continuous surfaces accordingly.

In some aspects, the annotation device may recognize (e.g., the sensors may capture and generate the 4D sensor data to indicate) different gestures of limbs of the user to label different features with different labels. In some aspects, the annotated labels may include elements to intelligent sensor-fusion and multimodal-perception models grounded in SML.

The PUI and the volumetric representation of the raw data may be displayed via a VR headset, an AR display, a 3D hologram, or any other appropriate volume based display. The annotation device may select a type of display medium based on information density in the raw data. In some aspects, the information density may include a ratio of features (e.g., meaningful content per byte).

In the following, various aspects of the present disclosure will be illustrated:

Example 1 may include a system that includes an annotation device. The annotation device may include a memory having computer-readable instructions stored thereon; and a processor operatively coupled to the memory and configured to read and execute the computer-readable instructions to perform or control performance of operations that include: receive 4D sensor data representative of a first scene, the 4D sensor data including a point representative of a human limb in the first scene; receive 4D data representative of a second scene and includes a plurality of points representative of a feature in the second scene; generate a first octree representative of occupation by the human limb in the first scene based on the point and a second octree representative of occupation of the second scene based on the plurality of points; map the first octree and the second octree to a reference frame; determine whether there is an octree-to-octree intersection of the feature and the human limb within the reference frame; and annotate the feature based on the octree-to-octree intersection.

Example 2 may include the system of example 1, wherein the plurality of points include a second plurality of points, the point forms a portion of a first plurality of points, and the 4D sensor data includes a frame representative of the first scene at a particular time, the operation receive 4D sensor data representative of the first scene includes: generate a plurality of point clouds, each point cloud of the plurality of point clouds including a portion of the first plurality of points; determine a time stamp associated with the particular time; and identify the point representative of the human limb.

Example 3 may include the system of example 2, wherein: the plurality of point clouds are captured and represented according to:

$$\{X_i \in R^3\}^{0 \leq i < n}$$

in which n represents a number of points within the corresponding point cloud, $X_i$ represents a point in 3D space, i represents an integer indicating a current point, and $R^3$ represents Euclidean space including a temporal dimension over reals; and the time stamp is determined according to:

$$\{ X_i \in \boldsymbol{R^4} \}^{0 \leq i < n}$$

in which $X_i$ represents the point in 3D space, i represents the integer indicating the current point, $R^4$ represents Euclidean space including a temporal dimension over reals, and n represents the number of points within the corresponding point cloud.

Example 4 may include the system of any of examples 1-3, wherein the 4D sensor data further includes color data corresponding to the point according to at least one of a RGB color space, a HSV color space, and a LAB color space.

Example 5 may include the system of any of examples 2-4, wherein the first plurality of points includes a plurality of 4D points, the operations further include determine a parameter of each 4D point of the plurality of 4D points.

Example 6 may include the system of example 5, wherein the operation determine the parameter of each 4D point of the plurality of 4D points includes: determine an X coordinate, a Y coordinate, a Z coordinate, and a time coordinate of each 4D point of the plurality of 4D points relative to the first scene; and determine a color of each 4D point of the plurality of 4D points.

Example 7 may include the system of any of examples 1-6 further including a sensor configured to generate the 4D sensor data.

Example 8 may include the system of example 7, wherein the sensor includes 3D sensor and a color sensor, the operations further include: determine a physical position of the 3D sensor relative to the color sensor; and calibrate the 4D sensor data based on the physical position of the 3D sensor relative to the color sensor.

Example 9 may include the system of example 8, wherein the 4D sensor data is calibrated according to:

$$\Psi \left( X_i \in \boldsymbol{R^3}, \mathrm{T}_C^P \in \boldsymbol{SE^3}, K \in \boldsymbol{R^{\{3x3\}}} \right) \rightarrow \boldsymbol{C_i} \in \boldsymbol{R^h}$$

in which $X_i \in R^3$ represents the point flows, $T_C^P \in \mathrm{SE}^3$, $K \in R^{\{3x3\}}$ represents the kinematic transformation, $X_i$ represents a point in 3D space, $R^3$ represents Euclidean space including a temporal dimension over reals, $T_C^P$ represents color and depth data, $SE^3$ represents a rigid transformation, K represents a projection matrix of the kinematic transformation, $R^{\{3x3\}}$ represents a 3x3 matrix, $C_i$ represents a color of a current point, and R represents the Euclidian space, and h represents an integer indicating a number of dimension within the Euclidian space.

Example 10 may include the system of any of examples 8 and 9, wherein the 3D sensor includes an accelerometer and a gyroscope, the operations further include determine a physical position of the 3D sensor relative to the first scene and a zenith corresponding to the first scene using the accelerometer.

Example 11 may include the system of any of examples 8-10, wherein the 4D sensor data includes a plurality of frames representative of the first scene, the operations further including: determine movement of the 3D sensor relative to a previous frame of the plurality of frames; and calibrate the 4D sensor data based on the movement of the 3D sensor relative to the previous frame.

Example 12 may include the system of any of examples 1-11, wherein the operation generate the first octree representative of occupation by the human limb in the first scene based on the point includes: generate a kinematic frame representative of the 4D sensor data; and map the kinematic frame to a pre-defined reference frame, wherein the pre-defined reference frame corresponds to the first scene.

Example 13 may include the system of example 12, wherein the kinematic frame is mapped to the pre-defined reference frame according to:

$$\mathrm{T}_{iE}^S \cdot \boldsymbol{G_c} \mapsto \boldsymbol{T_k}$$

in which $\mathrm{T}_{iE}^S$ represents the kinematic frame with respect to the Zenith orientation, $G_c$ represents an application-space boundary frame, and $T_k$ represents a composed transformation which maps the 3D points of the 3D workspace the application-space boundary frame.

Example 14 may include the system of any of examples 1-13, wherein the operation receive the 4D sensor data representative of the first scene includes identify the point representative of the human limb in the first scene according to:

$$\beta(X_i, C_i, P_{[t0,t1]}, P_{[t1,t2]}) \mapsto \{0, LA := 1, RA := 2, RL := 3, LL := 4\} \subset N$$

in which $X_i$ represents a point in 3D space, $C_i$ represents a color of a current point, $P_{[t0,t1]}$ represents a previous point cloud, $P_{[t1,t2]}$ represents a current point cloud, LA represents left arm, RA represents right arm, RL represents right leg, and LL represents left leg.

Example 15 may include the system of any of examples 1-14, wherein the 4D data includes a plurality of frames representative of the second scene, the operation receive 4D data representative of the second scene includes aggregate a portion of the frames of the plurality of frames into a single frame, the single frame including points representative of the feature in each of the frames of the portion of the frames.

Example 16 may include the system of any of examples 1-15, wherein the operation generate the second octree representative of occupation of the second scene based on the plurality of points includes: generate a plurality of nodes according to:

$$V(X_0, , R_0) = \{(X_0 \cdot \hat{x}) - R_0 \le x < (X_0 \cdot \hat{x}) + R_0\} \times \{(X_0 \cdot \hat{y}) - R_0 \le y < (X_0 \cdot \hat{y}) + R_0\} \times \{(X_0 \cdot \hat{z}) - R_0 \le z < (X_0 \cdot \hat{z}) + R_0\} \subset R^3$$

in which $\hat{x}$, $\hat{y}$, and $\hat{z}$ represent basis vectors spanning the Euclidian space, Xo represents a point center of a Euclidian space, $R_0$ represents a radius of a root discrete volumetric units, and $R_3$ represents the Euclidian space including a temporal dimension over reals; and determine if each node is occupied, responsive to a node being occupied, divide the corresponding node of the plurality of nodes into another plurality of nodes, wherein each point within the plurality of nodes and the another plurality of nodes are contained within discrete volumetric units that represent the feature in the second scene.

Example 17 may include the system of any of examples 1-16, wherein the operation generate first octree representative of occupation by the human limb in the first scene based on the point includes: generate a plurality of nodes according to:

$$V(X_0, , R_0) = \{(X_0 \cdot \hat{x}) - R_0 \le x < (X_0 \cdot \hat{x}) + R_0\} \times \{(X_0 \cdot \hat{y}) - R_0 \le y < (X_0 \cdot \hat{y}) + R_0\} \times \{(X_0 \cdot \hat{z}) - R_0 \le z < (X_0 \cdot \hat{z}) + R_0\} \subset R^3$$

in which $\hat{x}$, $\hat{y}$, and $\hat{z}$ represent basis vectors spanning the Euclidian space, Xo represents discrete volumetric unit center, $R_0$ represents a radius of a root discrete volumetric units, , and $R_3$ represents the Euclidian space including a temporal dimension over reals; and determine if each node is occupied, responsive to a node being occupied, divide the corresponding node of the plurality of nodes into another plurality of nodes, wherein each point within the plurality of nodes and the another plurality of nodes are voxelized representations of the human limb in the first scene.

Example 18 may include the system of any of examples 1-17, wherein the operation map the first octree and the second octree to the reference frame includes: determine a first scalar volume of the first octree; determine a second scalar volume of the second octree; compare the first scalar volume to the second scalar volume; map the first octree and the second octree to each other based on the comparison; adjust a size of at least one of the node in the first octree and the node in the second octree to cause the sizes to be uniform according to:

$$ⅲ(x_a, r_a, x_b, r_b, m) \rightarrow V(x_{\{a \wedge b\}}, \max(r_a, r_b) \% m)$$

in which $x_a$ represents a center of a discrete volumetric unit in the first octree, $r_a$ represents a radius of the discrete volumetric unit in the first octree, $x_b$ represents the center of a discrete volumetric unit in the second octree, $r_b$ represents a radius of the discrete volumetric unit in the second octree, and $\%m$ represents a pre-defined target radius of the reference frame.

Example 19 may include the system of example 18, wherein the operation determine whether there is the octree-to-octree intersection of the feature and the human limb within the reference frame includes determine whether a node in the first octree and another node in the second octree includes similar subspace within the reference frame according to:

$$\odot (Voctree) \rightarrow R+$$

in which Voctree represents the first octree or the second octree and R+ represents an integer that is greater than zero, wherein the octree-to-octree intersection is based on the node in the first octree and the node in the second octree include the similar subspace within the reference frame.

Example 20 may include the system of any of examples 1-19, wherein the operation determine whether there is the octree-to-octree intersection of the feature and the human limb within the reference frame includes determine whether the octree-to-octree intersection includes indicates a surface description that indicates a continuous surface within the second scene is to be annotated, wherein the feature is located within the continuous surface.

Example 21 may include the system of any of examples 1-20, wherein the system further includes a perceptual user interface to receive user input and provide user instructions.

Example 22 may include a non-transitory computer-readable medium having computer-readable instructions stored thereon that are executable by a processor to perform or control performance of operations including: receiving 4D sensor data representative of a first scene, the 4D sensor data including a point representative of a human limb in the first scene; receiving 4D data representative of a second scene and includes a plurality of points representative of a feature in the second scene; generating a first octree representative of occupation by the human limb in the first scene based on the point and a second octree representative of occupation of the second scene based on the plurality of points; mapping the first octree and the second octree to a reference frame; determining whether there is an octree-to-octree intersection of the feature and the human limb within the reference frame; and annotating the feature based on the octree-to-octree intersection.

Example 23 may include the non-transitory computer-readable medium of example 22, wherein the plurality of points include a second plurality of points, the point forms a portion of a first plurality of points, and the 4D sensor data includes a frame representative of the first scene at a particular time, the operation receiving 4D sensor data representative of the first scene includes: generating a plurality of point clouds, each point cloud of the plurality of point clouds including a portion of the first plurality of points; determining a time stamp associated with the particular time; and identifying the point representative of the human limb.

Example 24 may include the non-transitory computer-readable medium of example 23, wherein: the plurality of point clouds are captured and represented according to:

$$\{X_i \in R^3\}^{0 \le i < n}$$

in which n represents a number of points within the corresponding point cloud, $X_i$ represents a point in 3D space, i represents an integer indicating a current point, and $R^3$ represents Euclidean space including a temporal dimension over reals; and the time stamp is determined according to:

$$\{X_i \in R^4\}^{0 \le i < n}$$

in which $X_i$ represents the point in 3D space, i represents the integer indicating the current point, $R^4$ represents Euclidean space including a temporal dimension over reals, and n represents the number of points within the corresponding point cloud.

Example 25 may include the non-transitory computer-readable medium of any of examples 22-24, wherein the first plurality of points includes a plurality of 4D points, the operations further include determining a parameter of each 4D point of the plurality of 4D points.

Example 26 may include the non-transitory computer-readable medium of example 25, wherein the operation determining the parameter of each 4D point of the plurality of 4D points includes: determining an X coordinate, a Y coordinate, a Z coordinate, and a time coordinate of each 4D point of the plurality of 4D points relative to the first scene; and determining a color of each 4D point of the plurality of 4D points.

Example 27 may include the non-transitory computer-readable medium of any of examples 22-26 the operations further including determining a physical position of a 3D sensor relative to a color sensor; and calibrating the 4D sensor data based on the physical position of the 3D sensor relative to the color sensor.

Example 28 may include the non-transitory computer-readable medium of example 27, wherein the 4D sensor data is calibrated according to:

$$\Psi (X_i \in R^3, T_C^P \in SE^3, K \in R^{\{3x3\}}) \rightarrow C_i \in R^h$$

in which $X_i \in R^3$ represents the point flows, $T_C^P \in SE^3$ , $K \in R^{\{3 \times 3\}}$ represents the kinematic transformation, $X_i$ represents a point in 3D space, $R^3$ represents Euclidean space including a temporal dimension over reals, $T_C^P$ represents color and depth data, $SE^3$ represents a rigid transformation, K represents a projection matrix of the kinematic transformation, $R^{\{3 \times 3\}}$ represents a 3x3 matrix, $C_i$ represents a color of a current point, and R represents the Euclidian space, and h represents an integer indicating a number of dimension within the Euclidian space.

Example 29 may include the non-transitory computer-readable medium of any of examples 22-28 the operations further include determining a physical position of a 3D sensor relative to the first scene and a zenith corresponding to the first scene.

Example 30 may include the non-transitory computer-readable medium of any of examples 22-29, wherein the 4D sensor data includes a plurality of frames representative of the first scene the operations further including: determining movement of a 3D sensor relative to a previous frame of the plurality of frames; and calibrating the 4D sensor data based on the movement of the 3D sensor relative to the previous frame.

Example 31 may include the non-transitory computer-readable medium of any of examples 22-30, wherein the operation generating the first octree representative of occupation by the human limb in the first scene based on the point includes: generating a kinematic frame representative of the 4D sensor data; and mapping the kinematic frame to a pre-defined reference frame, wherein the pre-defined reference frame corresponds to the first scene.

Example 32 may include the non-transitory computer-readable medium of example 31, wherein the kinematic frame is mapped to the pre-defined reference frame according to:

$$T_{iE}^{S} \cdot G_c \mapsto T_k$$

in which $T_{iE}^{S}$ represents the kinematic frame with respect to the Zenith orientation, $G_c$ represents an application-space boundary frame, and Tk represents a composed transformation which maps the 3D points of the 3D workspace the application-space boundary frame.

Example 33 may include the non-transitory computer-readable medium of any of examples 22-32, wherein the operation receiving the 4D sensor data representative of the first scene includes identifying the point representative of the human limb in the first scene according to:

$$\beta(X_i, C_i , P_{[t0,t1]}, P_{[t1,t2]}) \mapsto \{0, LA := 1, RA := 2, RL := 3, LL := 4\} \subset N$$

in which $X_i$ represents a point in 3D space, $C_i$ represents a color of a current point, $P_{[t0,t1]}$ represents a previous point cloud, $P_{[t1,t2]}$ represents a current point cloud, LA represents left arm, RA represents right arm, RL represents right leg, and LL represents left leg.

Example 34 may include the non-transitory computer-readable medium of any of examples 22-33, wherein the 4D data includes a plurality of frames representative of the second scene, the operation receiving 4D data representative of the second scene includes aggregating a portion of the frames of the plurality of frames into a single frame, the single frame including points representative of the feature in each of the frames of the portion of the frames.

Example 35 may include the non-transitory computer-readable medium of any of examples 22-34, wherein the operation generating the second octree representative of occupation of the second scene based on the plurality of points includes: generating a plurality of nodes according to:

$$V(X_0, , R_0 ) = \{(X_0 \cdot \hat{x}) - R_0 \le x < (X_0 \cdot \hat{x}) + R_0\} \times \{(X_0 \cdot \hat{y}) - R_0 \le y < (X_0 \cdot \hat{y}) + R_0\} \times \{(X_0 \cdot \hat{z}) - R_0 \le z < (X_0 \cdot \hat{z}) + R_0 \} \subset R^3$$

in which $\hat{x}, \hat{y},$ and $\hat{z}$ represent basis vectors spanning the Euclidian space, Xo represents a point center of a Euclidian space, $R_0$ represents a radius of a root discrete volumetric units, and $R_3$ represents the Euclidian space including a temporal dimension over reals; and determining if each node is occupied, responsive to a node being occupied, divide the corresponding node of the plurality of nodes into another plurality of nodes, wherein each point within the plurality of nodes and the another plurality of nodes are contained within discrete volumetric units that represent the feature in the second scene.

Example 36 may include the non-transitory computer-readable medium of any of examples 22-35, wherein the operation generating first octree representative of occupation by the human limb in the first scene based on the point includes: generating a plurality of nodes according to:

$$V(\boldsymbol{X_0}, , R_0) = \{(\boldsymbol{X_0} \cdot \hat{x}) - R_0 \le x < (\boldsymbol{X_0} \cdot \hat{x}) + R_0\} \times \{(\boldsymbol{X_0} \cdot \hat{y}) - R_0 \le y < (\boldsymbol{X_0} \cdot \hat{y}) + R_0\} \times \{(\boldsymbol{X_0} \cdot \hat{z}) - R_0 \le z < (\boldsymbol{X_0} \cdot \hat{z}) + R_0 \} \subset \mathrm{R}^3$$

in which $\hat{x}$, $\hat{y}$, and $\hat{z}$ represent basis vectors spanning the Euclidian space, Xo represents discrete volumetric unit center, $R_0$ represents a radius of a root discrete volumetric units, , and $R_3$ represents the Euclidian space including a temporal dimension over reals; and determining if each node is occupied, responsive to a node being occupied, divide the corresponding node of the plurality of nodes into another plurality of nodes, wherein each point within the plurality of nodes and the another plurality of nodes are voxelized representations of the human limb in the first scene.

Example 37 may include the non-transitory computer-readable medium of any of examples 22-36, wherein the operation mapping the first octree and the second octree to the reference frame includes: determining a first scalar volume of the first octree; determining a second scalar volume of the second octree; comparing the first scalar volume to the second scalar volume; mapping the first octree and the second octree to each other based on the comparison; adjusting a size of at least one of the node in the first octree and the node in the second octree to cause the sizes to be uniform according to:

$$\pitchfork (x_a, r_a, x_b, r_b, m) \to V(\boldsymbol{x}_{\{a \wedge b\}}, \max(r_a, r_b)\, \% m)$$

in which $x_a$ represents a center of a discrete volumetric unit in the first octree, $r_a$ represents a radius of the discrete volumetric unit in the first octree, $x_b$ represents the center of a discrete volumetric unit in the second octree, $r_b$ represents a radius of the discrete volumetric unit in the second octree, and %m represents a pre-defined target radius of the reference frame.

Example 38 may include the non-transitory computer-readable medium of example 37, wherein the operation determining whether there is the octree-to-octree intersection of the feature and the human limb within the reference frame includes determining whether a node in the first octree and another node in the second octree includes similar subspace within the reference frame according to:

$$\odot (Voctree) \to R+$$

in which Voctree represents the first octree or the second octree and R+ represents an integer that is greater than zero, wherein the octree-to-octree intersection is based on the node in the first octree and the node in the second octree include the similar subspace within the reference frame.

Example 39 may include the non-transitory computer-readable medium of any of examples 22-38, wherein the operation determining whether there is the octree-to-octree intersection of the feature and the human limb within the reference frame includes determining whether the octree-to-octree intersection includes indicates a surface description that indicates a continuous surface within the second scene is to be annotated, wherein the feature is located within the continuous surface.

Example 40 may include a method, including: receiving 4D sensor data representative of a first scene, the 4D sensor data including a point representative of a human limb in the first scene; receiving 4D data representative of a second scene and includes a plurality of points representative of a feature in the second scene; generating a first octree representative of occupation by the human limb in the first scene based on the point and a second octree representative of occupation of the second scene based on the plurality of points; mapping the first octree and the second octree to a reference frame; determining whether there is an octree-to-octree intersection of the feature and the human limb within the reference frame; and annotating the feature based on the octree-to-octree intersection.

Example 41 may include the method of example 40, wherein the plurality of points include a second plurality of points, the point forms a portion of a first plurality of points, and the 4D sensor data includes a frame representative of the first scene at a particular time, receiving 4D sensor data representative of the first scene includes: generating a plurality of point clouds, each point cloud of the plurality of point clouds including a portion of the first plurality of points; determining a time stamp associated with the particular time; and identifying the point representative of the human limb.

Example 42 may include the method of example 40, wherein: the plurality of point clouds are captured and represented

according to:

$$\{X_i \in R^3\}^{0 \leq i < n}$$

in which n represents a number of points within the corresponding point cloud, $X_i$ represents a point in 3D space, i represents an integer indicating a current point, and $R^3$ represents Euclidean space including a temporal dimension over reals; and the time stamp is determined according to:

$$\{X_i \in R^4\}^{0 \leq i < n}$$

in which $X_i$ represents the point in 3D space, i represents the integer indicating the current point, $R^4$ represents Euclidean space including a temporal dimension over reals, and n represents the number of points within the corresponding point cloud.

Example 43 may include the method of any of examples 40-42, wherein the first plurality of points includes a plurality of 4D points, the method further includes determining a parameter of each 4D point of the plurality of 4D points.

Example 44 may include the method of example 43, wherein determining the parameter of each 4D point of the plurality of 4D points includes: determining an X coordinate, a Y coordinate, a Z coordinate, and a time coordinate of each 4D point of the plurality of 4D points relative to the first scene; and determining a color of each 4D point of the plurality of 4D points.

Example 45 may include the method of any of examples 40-44 further including determining a physical position of a 3D sensor relative to a color sensor; and calibrating the 4D sensor data based on the physical position of the 3D sensor relative to the color sensor.

Example 46 may include the method of example 45, wherein the 4D sensor data is calibrated according to:

$$\Psi\left(X_i \in R^3, T_C^P \in SE^3, K \in R^{\{3x3\}}\right) \to C_i \in R^h$$

in which $X_i \in R^3$ represents the point flows, $T_C^P \in SE^3$, $K \in R^{\{3x3\}}$ represents the kinematic transformation, $X_i$ represents a point in 3D space, $R^3$ represents Euclidean space including a temporal dimension over reals, $T_C^P$ represents color and depth data, $SE^3$ represents a rigid transformation, K represents a projection matrix of the kinematic transformation, $R^{\{3x3\}}$ represents a 3x3 matrix, $C_i$ represents a color of a current point, and R represents the Euclidian space, and h represents an integer indicating a number of dimension within the Euclidian space.

Example 47 may include the method of any of examples 40-46 further include determining a physical position of a 3D sensor relative to the first scene and a zenith corresponding to the first scene.

Example 48 may include the method of any of examples 40-47, wherein the 4D sensor data includes a plurality of frames representative of the first scene the method further including: determining movement of a 3D sensor relative to a previous frame of the plurality of frames; and calibrating the 4D sensor data based on the movement of the 3D sensor relative to the previous frame.

Example 49 may include the method of any of examples 40-48, wherein generating the first octree representative of occupation by the human limb in the first scene based on the point includes: generating a kinematic frame representative of the 4D sensor data; and mapping the kinematic frame to a pre-defined reference frame, wherein the pre-defined reference frame corresponds to the first scene.

Example 50 may include the method of example 49, wherein the kinematic frame is mapped to the pre-defined reference frame according to:

$$T_{iE}^S \cdot G_c \mapsto T_k$$

in which $T_{iE}^S$ represents the kinematic frame with respect to the Zenith orientation, $G_c$ represents an application-space boundary frame, and Tk represents a composed transformation which maps the 3D points of the 3D workspace the application-space boundary frame.

Example 51 may include the method of any of examples 40-50, wherein receiving the 4D sensor data representative of the first scene includes identifying the point representative of the human limb in the first scene according to:

$$\beta(X_i, C_i, P_{[t0,t1]}, P_{[t1,t2]}) \mapsto \{0, LA := 1, RA := 2, RL := 3, LL := 4\} \subset N$$

in which $X_i$ represents a point in 3D space, $C_i$ represents a color of a current point, $P_{[t0,t1]}$ represents a previous point cloud, $P_{[t1,t2]}$ represents a current point cloud, LA represents left arm, RA represents right arm, RL represents right leg, and LL represents left leg.

Example 52 may include the method of any of examples 40-51, wherein the 4D data includes a plurality of frames representative of the second scene, receiving 4D data representative of the second scene includes aggregating a portion of the frames of the plurality of frames into a single frame, the single frame including points representative of the feature in each of the frames of the portion of the frames.

Example 53 may include the method of any of examples 40-52, wherein generating the second octree representative of occupation of the second scene based on the plurality of points includes: generating a plurality of nodes according to:

$$V(X_0, , R_0) = \{(X_0 \cdot \hat{x}) - R_0 \leq x < (X_0 \cdot \hat{x}) + R_0\} \times \{(X_0 \cdot \hat{y}) - R_0 \leq y < (X_0 \cdot \hat{y}) + R_0\} \times \{(X_0 \cdot \hat{z}) - R_0 \leq z < (X_0 \cdot \hat{z}) + R_0\} \subset R^3$$

in which $\hat{x}$, $\hat{y}$, and $\hat{z}$ represent basis vectors spanning the Euclidian space, Xo represents a point center of a Euclidian space, $R_0$ represents a radius of a root discrete volumetric units, and $R_3$ represents the Euclidian space including a temporal dimension over reals; and determining if each node is occupied, responsive to a node being occupied, divide the corresponding node of the plurality of nodes into another plurality of nodes, wherein each point within the plurality of nodes and the another plurality of nodes are contained within discrete volumetric units that represent the feature in the second scene.

Example 54 may include the method of any of examples 40-53, wherein generating first octree representative of occupation by the human limb in the first scene based on the point includes: generating a plurality of nodes according to:

$$V(X_0, , R_0) = \{(X_0 \cdot \hat{x}) - R_0 \leq x < (X_0 \cdot \hat{x}) + R_0\} \times \{(X_0 \cdot \hat{y}) - R_0 \leq y < (X_0 \cdot \hat{y}) + R_0\} \times \{(X_0 \cdot \hat{z}) - R_0 \leq z < (X_0 \cdot \hat{z}) + R_0\} \subset R^3$$

in which $\hat{x}$, $\hat{y}$, and $\hat{z}$ represent basis vectors spanning the Euclidian space, Xo represents discrete volumetric unit center, $R_0$ represents a radius of a root discrete volumetric units, , and $R_3$ represents the Euclidian space including a temporal dimension over reals; and determining if each node is occupied, responsive to a node being occupied, divide the corresponding node of the plurality of nodes into another plurality of nodes, wherein each point within the plurality of nodes and the another plurality of nodes are voxelized representations of the human limb in the first scene.

Example 55 may include the method of any of examples 40-54, wherein mapping the first octree and the second octree to the reference frame includes: determining a first scalar volume of the first octree; determining a second scalar volume of the second octree; comparing the first scalar volume to the second scalar volume; mapping the first octree and the second octree to each other based on the comparison; adjusting a size of at least one of the node in the first octree and the node in the second octree to cause the sizes to be uniform according to:

$$⋔ (x_a, r_a, x_b, r_b, m) \rightarrow V(x_{\{a \wedge b\}}, \max(r_a, r_b) \% m)$$

in which $x_a$ represents a center of a discrete volumetric unit in the first octree, $r_a$ represents a radius of the discrete volumetric unit in the first octree, $x_b$ represents the center of a discrete volumetric unit in the second octree, $r_b$ represents a radius of the discrete volumetric unit in the second octree, and %m represents a pre-defined target radius of the reference frame.

Example 56 may include the method of example 55, wherein determining whether there is the octree-to-octree intersection of the feature and the human limb within the reference frame includes determining whether a node in the first octree and another node in the second octree includes similar subspace within the reference frame according to:

$$\odot (Voctree) \rightarrow R+$$

in which Voctree represents the first octree or the second octree and R+ represents an integer that is greater than zero, wherein the octree-to-octree intersection is based on the node in the first octree and the node in the second octree include the similar subspace within the reference frame.

Example 57 may include the method of any of examples 40-56, wherein determining whether there is the octree-to-octree intersection of the feature and the human limb within the reference frame includes determining whether the octree-to-octree intersection includes indicates a surface description that indicates a continuous surface within the second scene is to be annotated, wherein the feature is located within the continuous surface.

Example 58 may include a system, that includes: means to receive 4D sensor data representative of a first scene, the 4D sensor data including a point representative of a human limb in the first scene; means to receive 4D data representative of a second scene and includes a plurality of points representative of a feature in the second scene; means to generate a first tree data structure representative of occupation by the human limb in the first scene based on the point and a second tree data structure representative of occupation of the second scene based on the plurality of points; means to map the first tree data structure and the second tree data structure to a reference frame; means to determine whether a tree-to-tree data structure intersection of the feature and the human limb exists within the reference frame; and means to annotate the feature based on the tree-to-tree data structure intersection.

Example 59 may include the system of example 58, wherein the plurality of points include a second plurality of points, the point forms a portion of a first plurality of points, and the 4D sensor data includes a frame representative of the first scene at a particular time, the means to receive 4D sensor data representative of the first scene includes: means to generate a plurality of point clouds, each point cloud of the plurality of point clouds including a portion of the first plurality of points; means to determine a time stamp associated with the particular time; and means to identify the point representative of the human limb.

Example 60 may include the system of example 58 further including: means to determine a physical position of a 3D sensor relative to a color sensor; and means to calibrate the 4D sensor data based on the physical position of the 3D sensor relative to the color sensor.

Example 61 may include the system of example 58 further including means to determine a physical position of a 3D sensor relative to the first scene and a zenith corresponding to the first scene.

Example 62 may include the system of example 58, wherein the means to generate the first tree data structure representative of occupation by the human limb in the first scene based on the point includes: means to generate a kinematic frame representative of the 4D sensor data; and means to map the kinematic frame to a pre-defined reference frame, wherein the pre-defined reference frame corresponds to the first scene.

Example 63 may include the system of example 58, wherein the 4D data includes a plurality of frames representative of the second scene, the means to receive 4D data representative of the second scene includes means to aggregate a portion of the frames of the plurality of frames into a single frame, the single frame including points representative of the feature in each of the frames of the portion of the frames.

While the above descriptions and connected figures may depict electronic device components as separate elements, skilled persons will appreciate the various possibilities to combine or integrate discrete elements into a single element. Such may include combining two or more circuits for form a single circuit, mounting two or more circuits onto a common chip or chassis to form an integrated element, executing discrete software components on a common processor core, etc. Conversely, skilled persons will recognize the possibility to separate a single element into two or more discrete elements, such as splitting a single circuit into two or more separate circuits, separating a chip or chassis into discrete elements originally provided thereon, separating a software component into two or more sections and executing each on a separate processor core, etc.

It is appreciated that implementations of methods detailed herein are demonstrative in nature, and are thus understood as capable of being implemented in a corresponding device. Likewise, it is appreciated that implementations of devices detailed herein are understood as capable of being implemented as a corresponding method. It is thus understood that a device corresponding to a method detailed herein may include one or more components configured to perform each aspect of the related method.

All acronyms defined in the above description additionally hold in all claims included herein.

**Claims**

1. A system comprising an annotation device comprising:

a memory having computer-readable instructions stored thereon; and
a processor operatively coupled to the memory and configured to read and execute the computer-readable instructions to perform or control performance of operations comprising:

> receive four dimensional (4D) sensor data representative of a first scene, the 4D sensor data comprising a point representative of a human limb in the first scene;
> receive 4D data representative of a second scene and comprises a plurality of points representative of a feature in the second scene;
> generate a first tree data structure representative of occupation by the human limb in the first scene based on the point and a second tree data structure representative of occupation of the second scene based on the plurality of points;
> map the first tree data structure and the second tree data structure to a reference frame;
> determine whether a tree-to-tree data structure intersection of the feature and the human limb exists within the reference frame; and
> annotate the feature based on the tree-to-tree data structure intersection.

2. The system of claim 1, wherein the plurality of points comprise a second plurality of points, the point forms a portion of a first plurality of points, and the 4D sensor data comprises a frame representative of the first scene at a particular time, the operation receive 4D sensor data representative of the first scene comprises:

> generate a plurality of point clouds, each point cloud of the plurality of point clouds comprising a portion of the first plurality of points;
> determine a time stamp associated with the particular time; and
> identify the point representative of the human limb.

3. The system of claim 2, wherein the first plurality of points comprises a plurality of 4D points, the operations further comprise determine a parameter of each 4D point of the plurality of 4D points.

4. The system of any of claims 1-3, wherein the operation generate the first tree data structure representative of occupation by the human limb in the first scene based on the point comprises:

> generate a kinematic frame representative of the 4D sensor data; and
> map the kinematic frame to a pre-defined reference frame, wherein the pre-defined reference frame corresponds to the first scene.

5. The system of any of claims 1-4, wherein the 4D data comprises a plurality of frames representative of the second scene, the operation receive 4D data representative of the second scene comprises aggregate a portion of the frames of the plurality of frames into a single frame, the single frame comprising points representative of the feature in each of the frames of the portion of the frames.

6. A non-transitory computer-readable medium having computer-readable instructions stored thereon that are executable by a processor to perform or control performance of operations comprising:

> receiving four dimensional (4D) sensor data representative of a first scene, the 4D sensor data comprising a point representative of a human limb in the first scene;
> receiving 4D data representative of a second scene and comprises a plurality of points representative of a feature in the second scene;
> generating a first tree data structure representative of occupation by the human limb in the first scene based on the point and a second tree data structure representative of occupation of the second scene based on the plurality of points;
> mapping the first tree data structure and the second tree data structure to a reference frame;
> determining whether a tree-to-tree structure intersection of the feature and the human limb exists within the reference frame; and
> annotating the feature based on the tree-to-tree structure intersection.

7. The non-transitory computer-readable medium of claim 6, wherein the plurality of points comprise a second plurality of points, the point forms a portion of a first plurality of points, and the 4D sensor data comprises a frame representative of the first scene at a particular time, the operation receiving 4D sensor data representative of the first scene comprises:

generating a plurality of point clouds, each point cloud of the plurality of point clouds comprising a portion of the first plurality of points;
determining a time stamp associated with the particular time; and
identifying the point representative of the human limb.

8. The non-transitory computer-readable medium of any of claims 6-7, wherein the 4D sensor data comprises a plurality of frames representative of the first scene the operations further comprising:

determining movement of a 3D sensor relative to a previous frame of the plurality of frames; and
calibrating the 4D sensor data based on the movement of the 3D sensor relative to the previous frame.

9. The non-transitory computer-readable medium of any of claims 6-8, wherein the operation generating the first tree data structure representative of occupation by the human limb in the first scene based on the point comprises:

generating a kinematic frame representative of the 4D sensor data; and
mapping the kinematic frame to a pre-defined reference frame, wherein the pre-defined reference frame corresponds to the first scene.

10. The non-transitory computer-readable medium of any of claims 6-9, wherein the 4D data comprises a plurality of frames representative of the second scene, the operation receiving 4D data representative of the second scene comprises aggregating a portion of the frames of the plurality of frames into a single frame, the single frame comprising points representative of the feature in each of the frames of the portion of the frames.

11. A system, comprising:

means to receive four dimensional (4D) sensor data representative of a first scene, the 4D sensor data comprising a point representative of a human limb in the first scene;
means to receive 4D data representative of a second scene and comprises a plurality of points representative of a feature in the second scene;
means to generate a first tree data structure representative of occupation by the human limb in the first scene based on the point and a second tree data structure representative of occupation of the second scene based on the plurality of points;
means to map the first tree data structure and the second tree data structure to a reference frame;
means to determine whether a tree-to-tree data structure intersection of the feature and the human limb exists within the reference frame; and
means to annotate the feature based on the tree-to-tree data structure intersection.

12. The system of claim 11, wherein the plurality of points comprise a second plurality of points, the point forms a portion of a first plurality of points, and the 4D sensor data comprises a frame representative of the first scene at a particular time, the means to receive 4D sensor data representative of the first scene comprises:

means to generate a plurality of point clouds, each point cloud of the plurality of point clouds comprising a portion of the first plurality of points;
means to determine a time stamp associated with the particular time; and
means to identify the point representative of the human limb.

13. The system of claim 11 further comprising:

means to determine a physical position of a 3D sensor relative to a color sensor; and
means to calibrate the 4D sensor data based on the physical position of the 3D sensor relative to the color sensor.

14. The system of any of claims 11-13, wherein the means to generate the first tree data structure representative of occupation by the human limb in the first scene based on the point comprises:

means to generate a kinematic frame representative of the 4D sensor data; and
means to map the kinematic frame to a pre-defined reference frame, wherein the pre-defined reference frame corresponds to the first scene.

15. The system of any of claims 11-14, wherein the 4D data comprises a plurality of frames representative of the second scene, the means to receive 4D data representative of the second scene comprises means to aggregate a portion of the frames of the plurality of frames into a single frame, the single frame comprising points representative of the feature in each of the frames of the portion of the frames.

3D
Workspace
_118_

First
Sensor
_116a_

Second
Sensor
_116b_

Annotation Device _102_

Human Centered
Representation _104_

Perceptual
User Interface
_106_

Raw Data
_110_

Annotated Data
_114_

Domain
Taxonomy Data
_112_

Graphical User
Interface _108_

**FIG. 1**

FIG. 2

**FIG. 3**

FIG. 4

FIG. 5

EP 4 020 393 A1

**FIG. 6**

EP 4 020 393 A1

700

702 — Receiving Four Dimensional (4D) Sensor Data Representative Of A First Scene, The 4D Sensor Data Including A Point Representative Of A Human Limb In The First Scene

704 — Receiving 4D Data Representative Of A Second Scene And Includes A Plurality Of Points Representative Of A Feature In The Second Scene

706 — Generating A First Octree Representative Of Occupation By The Human Limb In The First Scene Based On The Point And A Second Octree Representative Of Occupation Of The Second Scene Based On The Plurality Of Points

708 — Mapping The First Octree And The Second Octree To A Reference Frame

710 — Determining Whether There Is An Octree-To-Octree Intersection Of The Feature And The Human Limb Within The Reference Frame

712 — Annotating The Feature Based On The Octree-To-Octree Intersection

# FIG. 7

Europäisches
Patentamt

European
Patent Office

Office européen
des brevets

# EUROPEAN SEARCH REPORT

**Application Number**

EP 21 19 5500

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HERMANN ANDREAS ET AL: "Unified GPU voxel collision detection for mobile manipulation planning", 2014 IEEE/RSJ INTERNATIONAL CONFERENCE ON INTELLIGENT ROBOTS AND SYSTEMS, IEEE, 14 September 2014 (2014-09-14), pages 4154-4160, XP032676520, DOI: 10.1109/IROS.2014.6943148 [retrieved on 2014-10-31] * abstract; figure 1 * * sections "III.A. Taxonomy of Memory Demands in Motion Planning", "III.B. Throughput vs. Memory Usage", "IV. Framework Components", "IV.A. Sensors for a-priori and live Environment Data", "IV.E. Visualization through Shared Memory", "V.C. GPU Octree", "VI. Evaluation Through Application in Motion Planning" * | 1-15 | INV. G06T7/73 G06T7/80 |
| X | KUMAR SHITIJ ET AL: "Sensing Volume Coverage of Robot Workspace using On-Robot Time-of-Flight Sensor Arrays for Safe Human Robot Interaction", 2019 IEEE INTERNATIONAL CONFERENCE ON SYSTEMS, MAN AND CYBERNETICS (SMC), IEEE, 6 October 2019 (2019-10-06), pages 378-384, XP033667903, DOI: 10.1109/SMC.2019.8914418 [retrieved on 2019-11-26] * abstract; figure 4 * * sections "I. Introduction", "II.A. Time-of-Flight Sensor Array Setup" * | 1-12,14, 15 | TECHNICAL FIELDS SEARCHED (IPC) G06T |

The present search report has been drawn up for all claims

| Place of search | Date of completion of the search | Examiner |
|---|---|---|
| Munich | 15 February 2022 | Eckert, Lars |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)